# EUROPEAN PATENT APPLICATION

(11) **EP 4 366 194 A1**
(43) Date of publication of application: **08.05.2024**
(21) Application number: 22852314.8
(22) Date of filing: 04.08.2022
(51) Int. Cl.: H04B 7/185

(54) **POSITION REPORTING METHOD AND SYSTEM IN BEIDOU COMMUNICATION SYSTEM, AND RELATED APPARATUS**

(30) Priority: 06.08.2021 CN 202110903413; 26.10.2021 CN 202111249563
(71) Applicant: Huawei Technologies Co., Ltd., Longgang Shenzhen, Guangdong 518129 (CN)
(72) Inventor: ZHU, Ying, Shenzhen, Guangdong 518129 (CN); QIAN, Feng, Shenzhen, Guangdong 518129 (CN); LI, Zhenzhou, Shenzhen, Guangdong 518129 (CN); SONG, Dake, Shenzhen, Guangdong 518129 (CN); XU, Haibo, Shenzhen, Guangdong 518129 (CN); LIU, Yongxiang, Shenzhen, Guangdong 518129 (CN)
(74) Representative: Maiwald GmbH
(86) International application number: PCT/CN2022/110347
(87) International publication number: WO 2023/011603

(57) **Abstract**

This application discloses a location reporting method in a BeiDou communication system, a system, and a related apparatus. This application relates to the field of satellite communication. A first terminal may generate one or more first user frames based on location information of a specified location. The first user frame includes a frame header and user information. The frame header of the first user frame includes a first subtype indicator field that indicates that a frame type of the first user frame is a location reporting frame. The user information of the one or more first user frames includes a location field and one or more receiver ID fields, the location field indicates the location information of the specified location, and the receiver ID field indicates an identity of a terminal that receives the location information. The first terminal may send the one or more first user frames to a BeiDou network device. The BeiDou network device may send the location information in the one or more first user frames to a second terminal. In this way, the second terminal can successfully receive and display the location information of the first terminal.

## Description

This application claims priority to Chinese Patent Application No. 202110903413.0, filed with the China National Intellectual Property Administration on August 6, 2021 and entitled "LOCATION REPORTING METHOD IN BEIDOU COMMUNICATION SYSTEM AND RELATED APPARATUS", and to Chinese Patent Application No. 202111249563.0, filed with the China National Intellectual Property Administration on October 26, 2021 and entitled "LOCATION REPORTING METHOD IN BEIDOU COMMUNICATION SYSTEM, SYSTEM, AND RELATED APPARATUS", which are incorporated herein by reference in their entireties.

### TECHNICAL FIELD

This application relates to the field of satellite communication, and in particular, to a location reporting method in a BeiDou communication system, a system, and a related apparatus.

### BACKGROUND

BeiDou satellite navigation system is an important infrastructure that integrates positioning, time serving, and communication. The BeiDou short message communication service is one of the features of BeiDou satellite navigation system, and is different from other global navigation systems such as GPS, GLONASS, and GALILEO. The BeiDou short message communication service is especially applicable to areas where mobile communication is not covered, or cannot be covered, or a communication system is damaged, such as oceans, deserts, grasslands, and uninhabited areas. A short message system ofBeiDou-3 satellites upgrades a short message technology system and opens some necessary resources of a BeiDou short message service communication system to civil users. For civil services and device features, communication protocols need to be designed based on features of the BeiDou short message service communication system.

Terminals under a BeiDou network are located in the areas where mobile communication is not covered, cannot be covered, or a communication system is damaged, such as oceans, deserts, grasslands, and uninhabited areas. When a user carrying a terminal is in a dangerous state, a rescue center needs to quickly determine a rescue location based on location information and perform rescue operations. Therefore, how a terminal under a BeiDou network shares location information with a terminal in a cellular network is an urgent problem to be resolved in a BeiDou communication system.

### SUMMARY

This application provides a location reporting method in a BeiDou communication system, a system, and a related apparatus. This application relates to the field of satellite communication. A first terminal may generate one or more first user frames based on location information of a specified location. The first user frame includes a frame header and user information. The frame header of the first user frame includes a first subtype indicator field that indicates that a frame type of the first user frame is a location reporting frame. The user information of the one or more first user frames includes a location field and one or more receiver ID fields, the location field indicates the location information of the specified location, and the receiver ID field indicates an identity of a terminal that receives the location information. The first terminal may send the one or more first user frames to a BeiDou network device. The BeiDou network device may send the location information in the one or more first user frames to a second terminal. In this way, in the BeiDou communication system, the first terminal may share the location information with another terminal.

According to a first aspect, this application provides a location reporting method in a BeiDou communication system, including:
A first terminal generates one or more location reporting frames.

The first terminal sends the one or more location reporting frames to a BeiDou network device. The location reporting frame includes a frame header and user information, the frame header includes a first subtype indicator field, and the first subtype indicator field indicates a frame type of the location reporting frame. The user information of the one or more location reporting frames includes one or more receiver ID fields and a location field, the location field indicates location information of a specified location, the one or more receiver ID fields include a first receiver ID field, and the first receiver ID field indicates an identity of a second terminal that receives the location information.

According to the method provided in this application, when there is no cellular network or wireless local area network in an environment in which the first terminal is located, the first terminal may also send the location information to another terminal.

In a possible implementation, the location information includes longitude information and latitude information of the specified location.

In a possible implementation, the location information further includes height information of the specified location.

In a possible implementation, the specified location is a location at which the first terminal is currently located or a location entered by a user.

In a possible implementation, that a first terminal generates one or more location reporting frames specifically includes:
The first terminal generates a location report packet at an application App layer based on the location information and an identity of a terminal that receives the location information.

The first terminal splits the location report packet into the one or more location reporting frames at a message data convergence MDCP layer and a satellite link control SLC layer.

In a possible implementation, the one or more location reporting frames further include a receiving user quantity indicator field, and the receiving user quantity indicator field indicates a quantity of receiver ID fields.

In a possible implementation, the one or more location reporting frames further include a fixed text field, and the fixed text field indicates an identity of a specified text message.

In a possible implementation, the one or more location reporting frames further include a text message field, and the text message field includes message data entered by the user.

In a possible implementation, the one or more location reporting frames further include a receiving application indicator field, and the receiving application indicator field indicates the BeiDou network device to send the location information of the specified location to the second terminal by using a first receiving server.

According to a second aspect, this application provides a location reporting method in a BeiDou communication system, including:
A BeiDou network device receives one or more location reporting frames sent by a first terminal, where the location reporting frame includes a frame header and user information, the frame header includes a first subtype indicator field, and the first subtype indicator field indicates a frame type of the location reporting frame; and the user information of the one or more location reporting frames includes one or more receiver ID fields and a location field, the location field indicates location information of a specified location, the one or more receiver ID fields include a first receiver ID field, and the first receiver ID field indicates an identity of a second terminal that receives the location information.

The BeiDou network device sends the location information in the one or more location reporting frames to the second terminal.

In a possible implementation, the location information includes longitude information and latitude information of the specified location.

In a possible implementation, the location information further includes height information of the specified location.

In a possible implementation, that the BeiDou network device sends the location information in the one or more location reporting frames to the second terminal specifically includes: The BeiDou network device determines, at a satellite link control SLC layer, a frame type of the one or more location reporting frames based on the first subtype indicator field, and uploads the frame type to an application App layer. The BeiDou network device performs processing at the SLC layer and a message data convergence MDCP layer based on the one or more location reporting frames to obtain a location report packet. The BeiDou network device sends location information in the location report packet to the second terminal at the App layer based on the frame type.

In a possible implementation, the one or more location reporting frames include a receiving user quantity indicator field, and the receiving user quantity indicator field indicates the BeiDou network device to obtain a receiver ID field in the one or more location reporting frames.

In a possible implementation, the one or more location reporting frames further include a fixed text field, and the fixed text field indicates the BeiDou network device to send a specified text message to the second terminal.

In a possible implementation, the one or more location reporting frames further include a text message field, and the text message field indicates the BeiDou network device to send, to the second terminal, message data entered by the user.

In a possible implementation, the one or more location reporting frames include a receiving application indicator field, and the receiving application indicator field indicates the BeiDou network device to send the location information to the second terminal by using a first receiving server. That the BeiDou network device sends the location information in the one or more location reporting frames to the second terminal specifically includes:

The BeiDou network device sends the location information in the one or more location reporting frames to the second terminal by using the first receiving server.

According to a third aspect, this application provides a BeiDou communication system, including a first terminal and a BeiDou network device. The first terminal is configured to generate one or more location reporting frames.

The location reporting frame includes a frame header and user information, the frame header includes a first subtype indicator field, and the first subtype indicator field indicates a frame type of the location reporting frame. The user information of the one or more location reporting frames includes one or more receiver ID fields and a location field, the location field indicates location information of a specified location, the one or more receiver ID fields include a first receiver ID field, and the first receiver ID field indicates an identity of a second terminal that receives the location information.

The first terminal is further configured to send the one or more location reporting frames to the BeiDou network device.

The BeiDou network device is configured to receive one or more location reporting frames sent by the first terminal.

The BeiDou network device is further configured to send the location information in the one or more location reporting frames to the second terminal.

According to a fourth aspect, this application provides a communication apparatus, including one or more processors, one or more memories, and a transceiver. The transceiver and the one or more memories are coupled to the one or more processors, the one or more memories are configured to store computer program code, the computer program code includes computer instructions, and when the one or more processors execute the computer instructions, the communication apparatus is enabled to perform the method in any possible implementation of the first aspect.

The communication apparatus may be a terminal or a device in another product form.

According to a fifth aspect, this application provides a communication apparatus, including one or more processors, one or more memories, and a transceiver. The transceiver and the one or more memories are coupled to the one or more processors, the one or more memories are configured to store computer program code, the computer program code includes computer instructions, and when the one or more processors execute the computer instructions, the communication apparatus is enabled to perform the method in any possible implementation of the second aspect.

The communication apparatus may be a BeiDou network device, or any network element or a combination of a plurality of network elements in the BeiDou network device.

According to a sixth aspect, this application provides a computer storage medium, including computer instructions. When the computer instructions are run on a computer, the computer is enabled to perform the method in any possible implementation of the first aspect.

According to a seventh aspect, this application provides a computer storage medium, including computer instructions. When the computer instructions are run on a computer, the computer is enabled to perform the method in any possible implementation of the second aspect.

According to an eighth aspect, this application provides a computer program product. When the computer program product runs on a computer, the computer is enabled to perform the method in any possible implementation of the first aspect.

According to a ninth aspect, this application provides a computer program product. When the computer program product runs on a computer, the computer is enabled to perform the method in any possible implementation of the second aspect.

According to a tenth aspect, this application provides a chip or a chip system, applied to a terminal, including a processing circuit and an interface circuit, where the interface circuit is configured to receive code instructions and transmit the code instructions to the processing circuit, and the processing circuit is configured to run the code instructions to perform the method in any possible implementation of the first aspect.

### BRIEF DESCRIPTION OF DRAWINGS

FIG. 1 is a schematic diagram of an architecture of a BeiDou communication system according to an embodiment of this application;
FIG. 2A-1 and FIG. 2A-2 are a schematic diagram of a protocol encapsulation architecture of inbound data in a BeiDou communication system according to an embodiment of this application;
FIG. 2B-1 and FIG. 2B-2 are a schematic diagram of a protocol parsing architecture of inbound data of a BeiDou communication system according to an embodiment of this application;
FIG. 3A to FIG. 3J are schematic diagrams of a group of interfaces according to an embodiment of this application;
FIG. 4A to FIG. 4F are schematic diagrams of another group of interfaces according to an embodiment of this application;
FIG. 5A to FIG. 5C are schematic diagrams of still another group of interfaces according to an embodiment of this application;
FIG. 6A and FIG. 6B are schematic diagrams of yet another group of interfaces according to an embodiment of this application;
FIG. 7 is a schematic flowchart of a location reporting method in a BeiDou communication system according to an embodiment of this application;
FIG. 8A is a schematic diagram of a frame format of a location reporting frame according to an embodiment of this application;
FIG. 8B is a schematic diagram of a structure of user information of a location reporting frame according to an embodiment of this application;
FIG. 9 is a schematic flowchart of another location reporting method in a BeiDou communication system according to an embodiment of this application;
FIG. 10 is a schematic flowchart of still another location reporting method in a BeiDou communication system according to an embodiment of this application;
FIG. 11 is a schematic diagram of another structure of user information of a location reporting frame according to an embodiment of this application;
FIG. 12 is a schematic flowchart of yet another location reporting method in a BeiDou communication system according to an embodiment of this application;
FIG. 13 is a schematic diagram of a structure of a location report packet according to an embodiment of this application;
FIG. 14 is a schematic diagram of a hardware structure according to an embodiment of this application;
FIG. 15 is a schematic flowchart of a location reporting method in a BeiDou communication system according to an embodiment of this application;
FIG. 16 is a schematic diagram of a structure of a communication apparatus according to an embodiment of this application;
FIG. 17 is a schematic diagram of a structure of another communication apparatus according to an embodiment of this application;
FIG. 18 is a schematic diagram of a structure of still another communication apparatus according to an embodiment of this application; and
FIG. 19 is a schematic diagram of a structure of yet another communication apparatus according to an embodiment of this application.

### DESCRIPTION OF EMBODIMENTS

The technical solutions according to embodiments of this application are clearly and completely described in the following with reference to the accompanying drawings. In descriptions of embodiments of this application, unless otherwise specified, "/" means "or". For example, A/B may represent A or B. In this specification, "and/or" describes only an association relationship for describing associated objects and represents that three relationships may exist. For example, A and/or B may represent the following three cases: Only A exists, both A and B exist, and only B exists.

The terms "first" and "second" below are merely intended for a purpose of description, and shall not be understood as implying or implying relative importance or implicitly indicating a quantity of indicated technical features. Therefore, a feature limited by "first" or "second" may explicitly or implicitly include one or more features. In the descriptions of embodiments of this application, unless otherwise specified, "a plurality of" means two or more than two.

The following describes a BeiDou communication system 10 provided in an embodiment of this application.

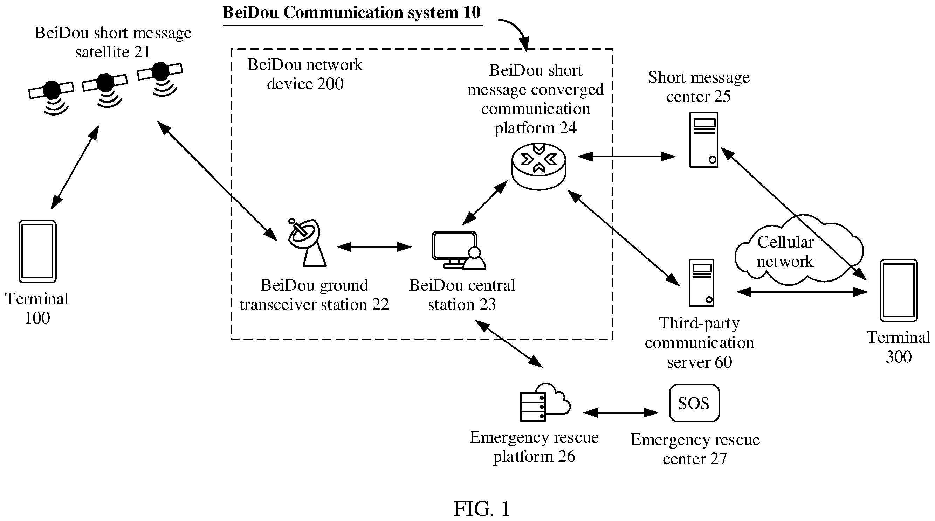

As shown in FIG. 1, the BeiDou communication system 10 may include but is not limited to a terminal 100, a BeiDou short message satellite 21, a BeiDou network device 200, a terminal 300, and the like.

The terminal 100 of a BeiDou network may send a BeiDou short message to the terminal 300 of a cellular network. Specifically, the terminal 100 may first send the BeiDou short message to the BeiDou short message satellite 21, and the BeiDou short message satellite 21 only performs a relay, and may directly forward, to the BeiDou network device 200 on the ground, the BeiDou short message sent by the terminal 100. The BeiDou network device 200 may parse, according to the BeiDou communication protocol, the BeiDou short message forwarded by the satellite, and forward, to a short message center 25, packet content parsed out from the BeiDou short message. The short message center 25 may forward the packet content to the terminal 300 through a conventional cellular communication network (cellular network for short).

Alternatively, the BeiDou network device 200 may forward, to a third-party communication server 60, packet content parsed out from the BeiDou short message. The third-party communication server 60 may be a server of a third-party application, for example, a server of instant messaging software like MeeTime. The third-party communication server 60 may forward the packet content to the terminal 300 through a conventional cellular communication network (cellular network for short).

The terminal 300 of the cellular network may also send a BeiDou short message to the terminal 100 of the BeiDou network. In an outbound process, the terminal 300 may send the short message to the short message center 25 through a conventional cellular communication network. The short message center 25 may forward the short message of the terminal 300 to the BeiDou network device 200. The BeiDou network device 200 may send the short message of the terminal 300 to the terminal 100 through relay by the BeiDou short message satellite 21.

Alternatively, the terminal 300 may send the short message to the third-party communication server 60 through a conventional cellular communication network. Then, the third-party communication server 60 forwards the short message of the terminal 300 to the BeiDou network device 200.

Optionally, the BeiDou communication system 10 may further include an emergency rescue platform 26 and an emergency rescue center 27. The BeiDou network device 200 may send, to the emergency rescue center 27 by using the emergency rescue platform 26, an emergency rescue frame sent by the terminal 100.

The BeiDou network device 200 may include but is not limited to a BeiDou ground transceiver station 22, a BeiDou central station 23, and a BeiDou short message converged communication platform 24. The BeiDou ground transceiver station 22 may include one or more devices having a sending function and one or more devices having a receiving function, or may include one or more devices having a sending function and a receiving function, which is not limited herein. The BeiDou ground transceiver station 22 may be configured to perform a data processing function of the BeiDou network device 200 at a physical layer (physical layer protocol, PHY). The BeiDou central station 23 may be configured to perform a data processing function of the BeiDou network device 200 at a satellite link control (satellite link control protocol, SLC) layer and a message data convergence protocol (message data convergence protocol, MDCP) layer. The BeiDou short message converged communication platform 24 may be configured to perform a data processing function at an application layer (application layer protocol, APP).

The short message center 25 may be configured to forward data sent by the BeiDou network device 200 to a terminal under a cellular network, or may be configured to forward data of a cellular network to the BeiDou network device 200.

Embodiments of this application provide location reporting methods in a BeiDou communication system. The terminal 100 may generate a first application layer packet based on location information and a receiver user identity (identity, ID), and encapsulate the first application layer packet into one or more first user frames. The first user frame includes a first subtype indicator field, and the first subtype indicator field may indicate that the first user frame is a location reporting frame. The terminal 100 may send the one or more first user frames to the BeiDou network device 200. After determining, by using the first subtype indicator, that the one or more first user frames are location reporting frames, the BeiDou network device 200 may determine a receiver ID based on a receiver ID field in the location reporting frame. The BeiDou network device 200 may send the location information and the receiver ID to the short message center 25. The short message center 25 may generate a first location message based on the location information, and send the first location message to the terminal 300 based on the receiver ID. In this way, the terminal 300 may successfully receive and display the location information of the terminal 100.

Optionally, the first application layer packet may further include a text message field, and the text message field may include message data entered by a user. The first application layer packet may be referred to as a location report packet.

In a possible implementation, when the first user frame further includes a receiving user quantity indicator field, the BeiDou network device 200 may determine a quantity of receiving users based on the receiving user quantity indicator field, and determine one or more receiver IDs based on the quantity of receiving users and the receiver ID field. The BeiDou network device 200 may send the one or more receiver IDs, the location information, and the text message to the short message center 25, and the short message center 25 may send a first location message generated based on the location information and the text message to one or more called terminals indicated by the receiver ID. In this way, the terminal 100 may send the location information to other terminals in a group.

The following describes a protocol architecture of inbound data of the BeiDou communication system 10 provided in an embodiment of this application.

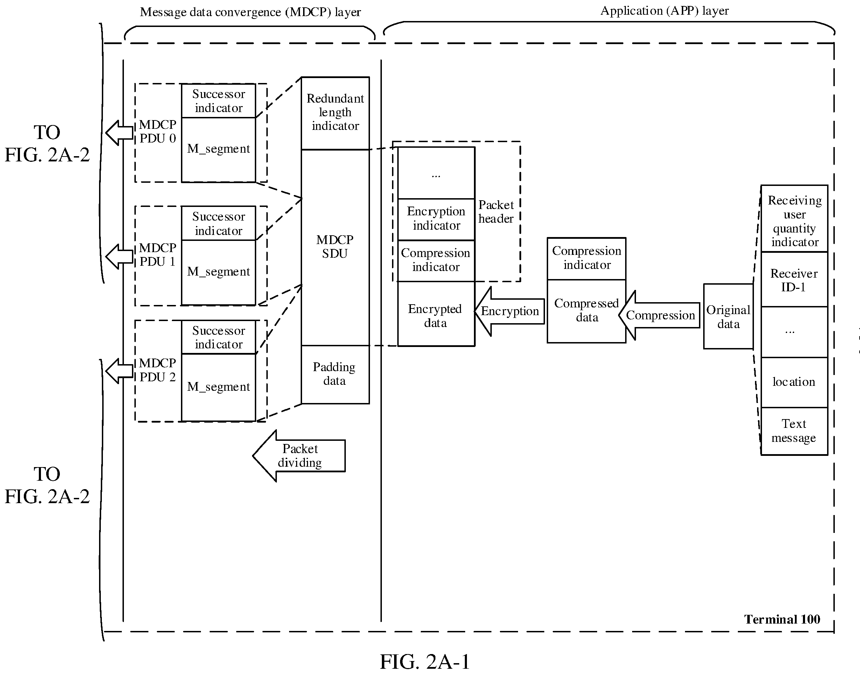

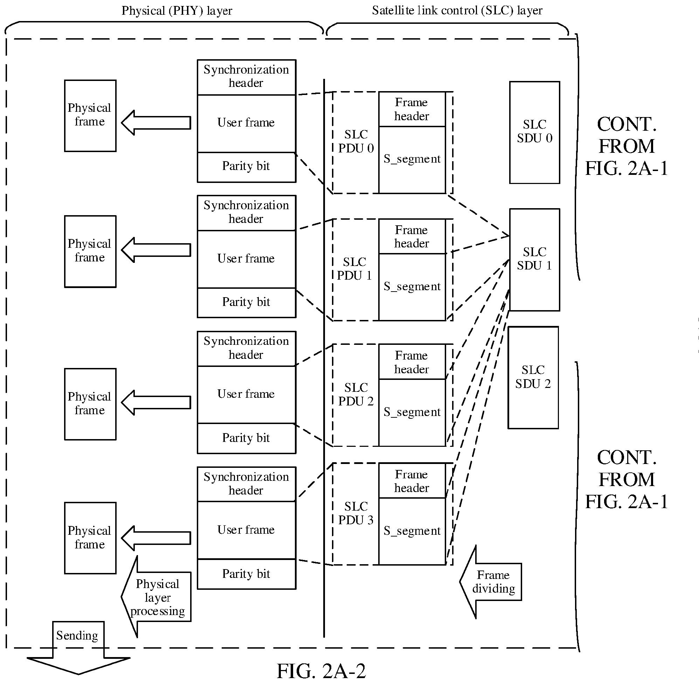

FIG. 2A-1 and FIG. 2A-2 are a schematic diagram of a protocol encapsulation architecture of inbound data of the BeiDou communication system 10 according to an embodiment of this application.

As shown in FIG. 2A-1 and FIG. 2A-2, a BeiDou packet transmission protocol layer on the terminal 100 may be divided into an application layer, a message data convergence layer, a satellite link control layer, and a physical layer.

When the terminal 100 sends data to the BeiDou network device 200, a working process of the BeiDou packet transmission protocol on the terminal 100 may be as follows:

At the App layer, the terminal 100 may generate an application layer packet based on original data. The terminal 100 may encrypt the original data by using a key, to obtain encrypted data. The terminal 100 may add packet header information before the encrypted data, to obtain the application layer packet. The original data may include but is not limited to message data (for example, a text message, a voice, an image, and an animation) entered by a user, a quantity indicator of a receiving user, a receiver ID, location information of a specified location, and the like. The packet header information may include but is not limited to an encryption indicator field. The encryption indicator field may indicate an encryption algorithm used by the terminal 100 to encrypt data. The specified location may be a current location of the terminal 100, or may be a location entered by the user.

The receiving user quantity indicator field may indicate a quantity of receiving users, namely, a quantity of receiver ID fields. For example, when the receiving user quantity indicator field indicates that the quantity of receiving users is 1, the quantity of receiver ID fields is also 1, and a value of the receiver ID field is a value of a receiver ID (for example, a mobile phone number). For another example, when the receiving user quantity indicator field indicates that the quantity of receiving users is 4, the quantity of receiver ID fields is also 4. For differentiation, the 1^{st} receiver ID field may be referred to as a receiver ID-1 field, and a value of the receiver ID-1 field is a value of the 1^{st} receiver ID (which may be referred to as a receiver ID-1). The 2^{nd} receiver ID field may be referred to as a receiver ID-2 field, a value of the receiver ID-2 field is a value of the 2^{nd} receiver ID (which may be referred to as a receiver ID2), and so on.

Optionally, the original data of the terminal 100 may include N receiver ID fields, where N is a positive integer. For example, when N is 4, if there is only one receiving user, a value of the 1^{st} receiver ID field is a value of a receiver ID, and values of the 2^{nd} receiver ID field, 3^{rd} receiver ID field, and 4^{th} receiver ID field are specified values, for example, zero.

Optionally, before the terminal 100 encrypts the original data, the terminal 100 may first compress the original data. It may be understood that the packet header may further include a compression indicator field. The compression indicator field may indicate a type of a compression algorithm used by the terminal 100 to compress data.

Further, optionally, the terminal 100 may compress the original data to obtain compressed data. The terminal 100 may add the compression indicator field before the compressed data. Then, the compressed data to which the compression indicator field is added is encrypted by using the key, to obtain the encrypted data.

At the MDCP layer, the terminal 100 may obtain, through an inter-layer interface, the application layer packet delivered by the App layer, and use the application layer packet as an MDCP SDU. At the MDCP layer, the terminal 100 may add padding data (padding) to a tail of the MDCP SDU to a specified length and add a redundant length indicator field to the MDCP SDU. The redundant length indicator field may indicate a length of the padding data. The terminal 100 may split the padding data and the MDCP SDU to which the redundant length indicator field is added into one or more pieces of MDCP segment data (M segment) with a fixed length, and add a follow-up indicator field to a header of each piece of MDCP segment data, to obtain an MDCP PDU. That is, the MDCP PDU includes the M segment and the follow-up indicator field. The follow-up indicator field may indicate a sequence of a current MDCP PDU in a plurality of MDCP PDUs in a same MDCP SDU, or the current MDCP PDU is a unique MDCP PDU of the MDCP SDU.

At the SLC layer, the terminal 100 may obtain, through an inter-layer interface, an MDCP PDU delivered by the MDCP layer, and use the MDCP PDU as an SLC SDU. At the SLC layer, the terminal 100 may segment the SLC SDU into one or more (for example, four) pieces of SLC segment data (S_segment) with a fixed length, and add frame header information (also referred to as frame format indicator information) to a header of each S_segment, to obtain an SLC PDU (also referred to as a user frame). The frame header information may include but is not limited to a user ID field, a frame total quantity field, and a frame sequence number field. The user ID field may indicate a terminal that generates the SLC PDU (for example, the terminal 100). The frame total quantity field may indicate a total quantity of SLC PDUs included in the SLC SDU to which the SLC PDU belongs. The frame sequence number field may indicate a sequence number of the SLC PDU in the SLC SDU to which the SLC PDU belongs.

Optionally, the frame header information may include a subtype indicator field, and the subtype indicator field may indicate a frame type of the user frame (namely, the SLC PDU). The frame type may include but is not limited to an emergency rescue frame, a location reporting frame, a packet communication frame, and the like. Field composition of user frames of different types is different. A frame type may be determined by using a subtype indicator field, that is, field composition of an application layer packet corresponding to a user frame is determined.

It may be understood that, after generating the application layer packet, the terminal 100 may deliver, at the App layer, information indicating that the frame type is the location reporting frame to the SLC layer. The terminal 100 may determine, at the SLC layer based on the frame type delivered by the App layer, a value of the subtype indicator field of the user frame corresponding to the application layer packet. For example, when the application layer packet generated by the terminal 100 is a location report packet (including location information), the terminal 100 may deliver, at the App layer, a frame type of the location reporting frame to the SLC layer through an inter-layer interface, and the terminal 100 may determine, at the SLC layer based on the frame type, a value of a subtype field of the location reporting frame corresponding to the location report packet.

At the PHY layer, the terminal 100 may obtain, through an inter-layer interface, the SLC PDU (namely, the user frame) delivered by the SLC layer. The terminal 100 may add a synchronization header and a parity bit to the user frame, and perform physical layer processing (for example, operations such as encoding, pilot interpolation, modulation, and spreading) on the user frame to which the synchronization header and the parity bit are added, to obtain a physical frame. The synchronization header may indicate the BeiDou network device 200 to synchronously receive the physical frame. Then, the terminal 100 may send the physical frame (also referred to as inbound data) to the BeiDou short message satellite 21, and forward the physical frame to the BeiDou network device 200 through relay by the BeiDou short message satellite 21.

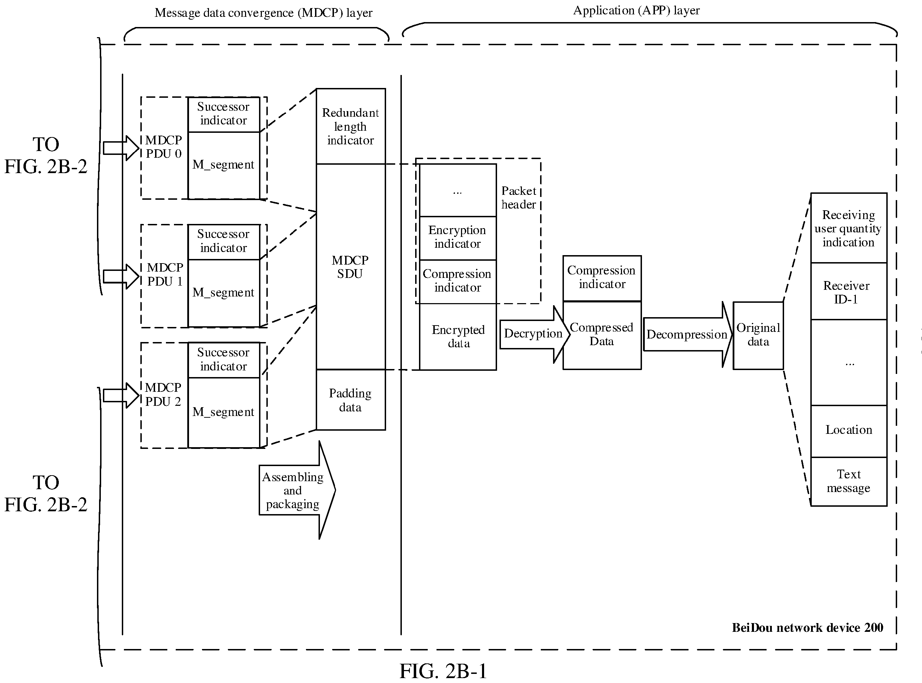

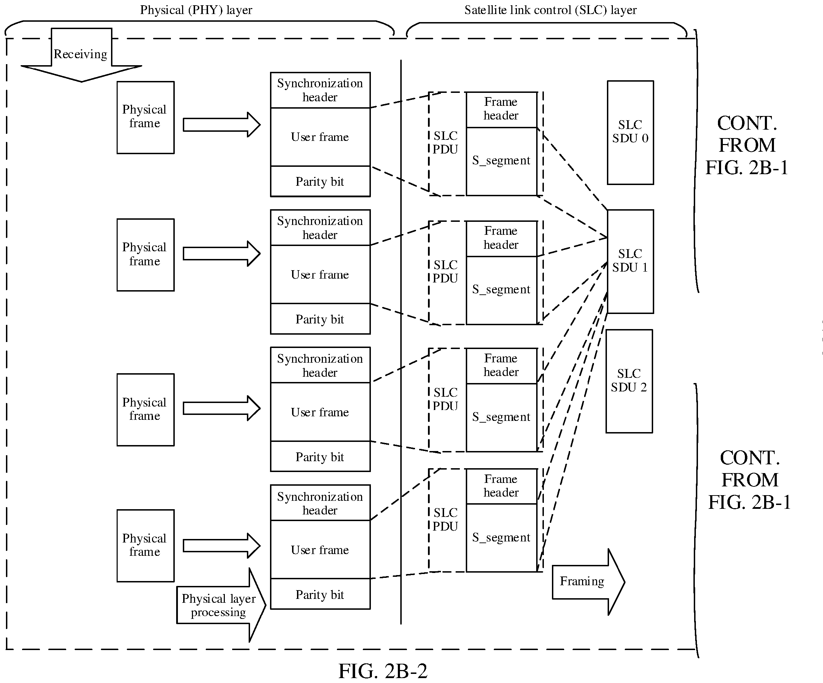

FIG. 2B-1 and FIG. 2B-2 are a schematic diagram of a protocol parsing architecture of inbound data of the BeiDou communication system 10 according to an embodiment of this application.

As shown in FIG. 2B-1 and FIG. 2B-2, a BeiDou packet transmission protocol layer on the BeiDou network device 200 may be divided into an application layer, a message data convergence layer, a satellite link control layer, and a physical layer. The BeiDou network device 200 may include but is not limited to a BeiDou ground transceiver station 22, a BeiDou central station 23, and a BeiDou short message converged communication platform 24. The BeiDou ground transceiver station 22 may be configured to be responsible for protocol processing at the PHY layer. The BeiDou central station 23 may be configured to be responsible for protocol processing at the SLC layer and the MDCP layer. The BeiDou short message converged communication platform 24 may be configured to be responsible for protocol processing at the App layer.

When the BeiDou network device 200 receives data sent by the terminal 100, a working process of the BeiDou packet transmission protocol on the BeiDou network device 200 may be as follows:

At the PHY layer, the BeiDou network device 200 may obtain a physical frame sent by the terminal 100. After performing physical layer processing (for example, operations such as despreading, demodulation, pilot removing, and decoding) on the physical frame, the BeiDou network device 200 obtains a user frame to which a synchronization header and a parity bit are added. The BeiDou network device 200 may deliver the user frame to the SLC layer through an inter-layer interface, and the user frame is used as an SLC PDU of the SLC layer.

At the SLC layer, the BeiDou network device 200 may concatenate, based on frame header information of SLC PDUs, the SLC PDUs that belong to a same SLC SDU of a same terminal into one SLC SDU. The BeiDou network device 200 may deliver the SLC SDU to the MDCP layer through an inter-layer interface, and use the SLC SDU as an MDCP PDU of the MDCP layer.

At the MDCP layer, the BeiDou network device 200 may concatenate all MDCP PDUs that belong to a same MDCP SDU based on a receiving time, and remove padding data and a redundant length indicator field from the concatenated MDCP PDU to obtain the MDCP SDU. The BeiDou network device 200 may deliver the MDCP SDU to the App layer through an inter-layer interface, and the MDCP SDU is used as an application layer packet received by the App layer.

Optionally, the BeiDou network device 200 may determine a frame type of the user frame at the SLC layer based on a subtype indicator field in the frame header information, and the BeiDou network device 200 may upload the frame type of the user frame and the SLC SDU to the MDCP layer at the SLC layer. After obtaining the MDCP SDU at the MDCP layer based on the SLC SDU, the BeiDou network device 200 may upload the frame type and the MDCP PDU to the application layer. The BeiDou network device 200 may determine, at the App layer based on the frame type of the user frame, composition of original data in the application layer packet of the user frame. For example, when the frame type of the user frame obtained by the BeiDou network device is a location reporting frame, the BeiDou network device 200 may obtain a receiver ID, location information, and a text message from original data based on the composition of the original data of the location reporting frame.

At the App layer, the BeiDou network device 200 may decrypt the application layer packet based on a packet header of the application layer packet by using a key, to obtain the original data.

Optionally, the BeiDou network device 200 may determine, based on the frame type of the user frame, field composition of the original data.

Optionally, after decrypting encrypted data, the BeiDou network device 200 may obtain compressed data. After decompressing the compressed data, the BeiDou network device 200 obtains an authentication code and the original data.

In this embodiment of this application, the foregoing protocol processing process is only an example for description, and a specific operation of protocol processing is not limited in this application.

In a possible implementation, the terminal 100 cannot use another network resource (for example, a cellular network) other than a satellite network, that is, when the terminal 100 is in a no-signal state, for example, when the terminal 100 is in an area that is not covered by mobile communication, cannot be covered, or a communication system is damaged, such as ocean, a desert, a grassland, or an uninhabited area. The terminal 100 may communicate with another terminal through a satellite network. The terminal 100 may display a satellite communication interface, and the terminal 100 may receive an input of adding location information by a user, and add the location information to to-be-sent original data. The terminal 100 may send, in response to an input of sending, by the user, a BeiDou short message that includes the location information, the BeiDou short message to the BeiDou network device 200. In this way, the user may send the location information to another terminal by using the terminal 100.

Specifically, the terminal 100 may respond to the input of sending, by the user, a BeiDou short message that includes the location information, and generate, based on a text message entered by the user, location information of a specified location, and a receiver ID, one or more user frames whose frame type is a location reporting frame. The terminal 100 may send the one or more user frames to the BeiDou network device 200. The user frame includes a subtype indicator field, and the subtype indicator field may indicate the frame type of the user frame.

The following describes schematic diagrams of a group of interfaces according to an embodiment of this application.

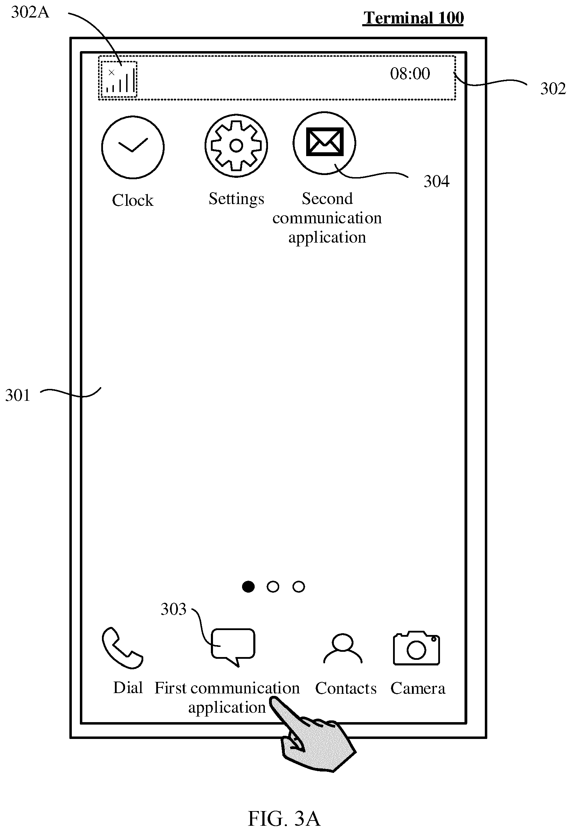

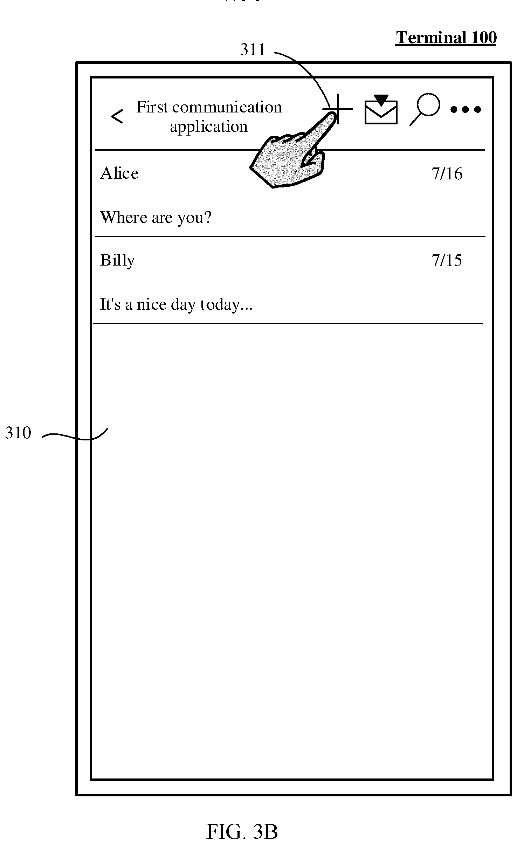

For example, as shown in FIG. 3A, the terminal 100 may display a home screen 301. The home screen 301 may include a plurality of application icons, for example, a first communication application icon 303. The first communication application icon 303 may be used to trigger displaying of an interface of a first communication application (for example, a first communication application interface 310 shown in FIG. 3B), where the first communication application may be used to receive/send a BeiDou short message. For example, the first communication application may be SMS, MeeTime, or the like.

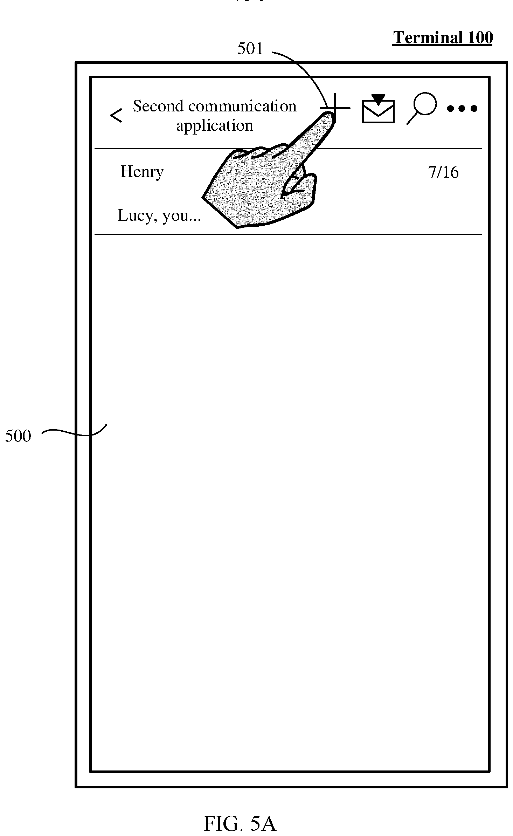

Optionally, the plurality of application icons may further include a second communication application icon 304. The second communication application icon 304 may be used to trigger displaying of an interface of the second communication application (for example, a second communication application interface 500 shown in FIG. 5A), where the second communication application may be used to receive/send a BeiDou short message. The second communication application is different from the first communication application. A status bar 302 may be further displayed on the home screen 301. A prompt icon 302A may be displayed in the status bar 302. The prompt icon 302A indicates the terminal 100 to disconnect from a cellular network. In this case, the terminal 100 is in a state where there is no cellular signal.

The terminal 100 receives an input (for example, a tap) of a user for the first communication application icon 303, and in response to the input, the terminal 100 may display the first communication application interface 310 shown in FIG. 3B.

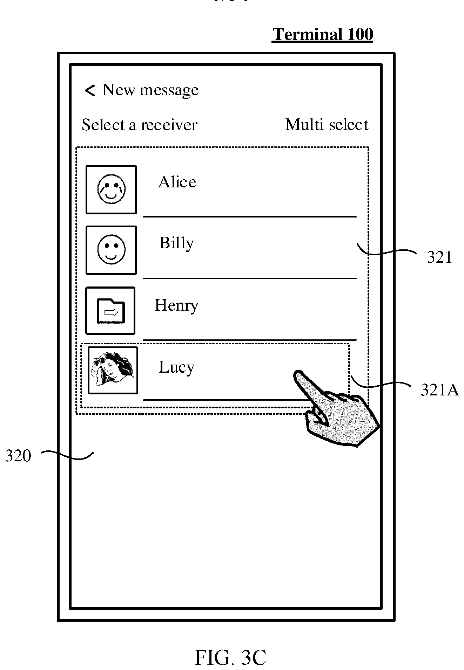

As shown in FIG. 3B, the first communication application interface 310 may include a new control 311, and the new control 311 may be used to trigger the terminal 100 to display a contact selection interface (for example, a contact selection interface 320 shown in the following FIG. 3C). The first communication application interface 310 may further display a historical contact entry. The historical contact entry may display information about a historical contact and a recent message record of the historical contact. The historical contact entry may be further used to trigger the terminal 100 to display a letter editing interface with the historical contact.

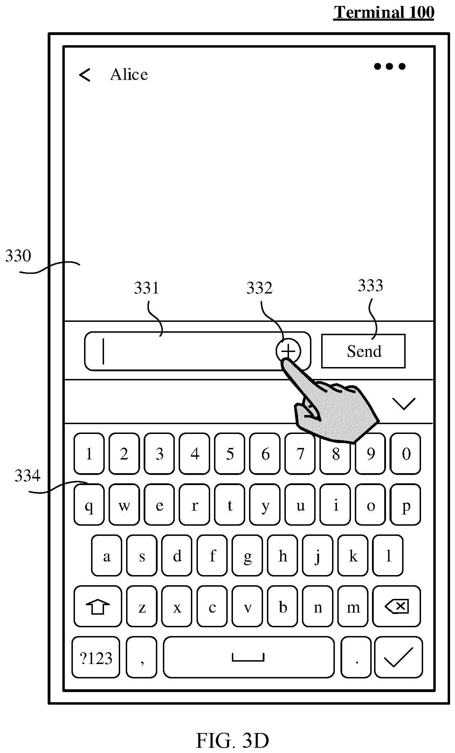

The terminal 100 receives an input (for example, a tap) of the user for the new control 311, and in response to the input, the terminal 100 may display the contact selection interface 320 shown in FIG. 3C. The contact selection interface 320 may display a contact display area 321. The contact display area 321 may display a plurality of contact icons, for example, a contact icon 321A. The contact icon may be used to trigger displaying of an information editing interface (for example, an information editing interface 330 shown in the following FIG. 3D) for communicating with a contact corresponding to the contact icon.

The terminal 100 receives an input (for example, a tap) of the user for the contact icon 321A, and in response to the input, the terminal 100 may display the information editing interface 330 of a contact "Lucy" corresponding to the contact icon 321A.

As shown in FIG. 3D, the information editing interface 330 may include but is not limited to an editing bar 331, a more control 332, a sending control 333, and the like. The editing bar 331 may be used to display content of a text message entered by the user. The adding control 332 may be used to add other content information (for example, information such as a location, a picture, and audio) to a BeiDou short message. The sending control 331 may be configured to trigger the terminal 100 to send, to the BeiDou network device 200, the BeiDou short message that includes the text message content displayed in the editing bar 331 and the other content information added by using the adding control 332. The information editing interface 330 may further display a keyboard display area 334, and the keyboard display area 334 may be used to enter text message content.

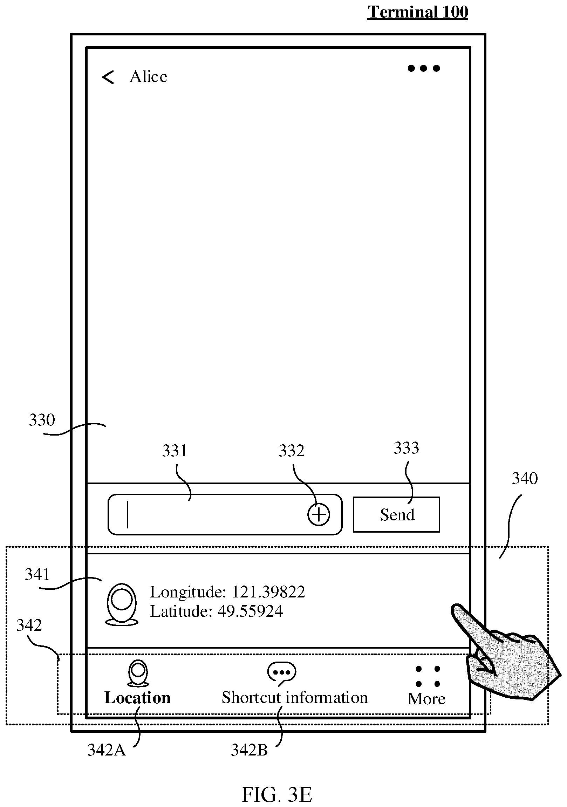

The terminal 100 receives an input (for example, a tap) of the user for the adding control 332, and in response to the input, the terminal 100 may display an adding information bar 340 shown in FIG. 3E. The adding information bar 340 includes a tab 342, and the tab 342 may include a location option 342A, a shortcut information option 342B, a more option, and the like. The location tab 342A is in a selected state, and the shortcut information option 342B and the more option are in an unselected state. Because the location tab 342A is in the selected state, the information bar 340 further displays a location display area 341. The location display area 341 includes a real-time location icon 341, and the real-time location icon 341 may include location information (for example, information such as a longitude, a latitude, and an altitude) of a current location of the terminal 100. For example, the real-time location icon 341 may display longitude information "121.39822 degrees" and latitude information "49.55924 degrees" of the current location of the terminal 100. Optionally, the location display area may further include a historical location icon, the historical location icon may include historical location information of the terminal 100, and the historical location icon may be used to add the historical location information to a BeiDou short message.

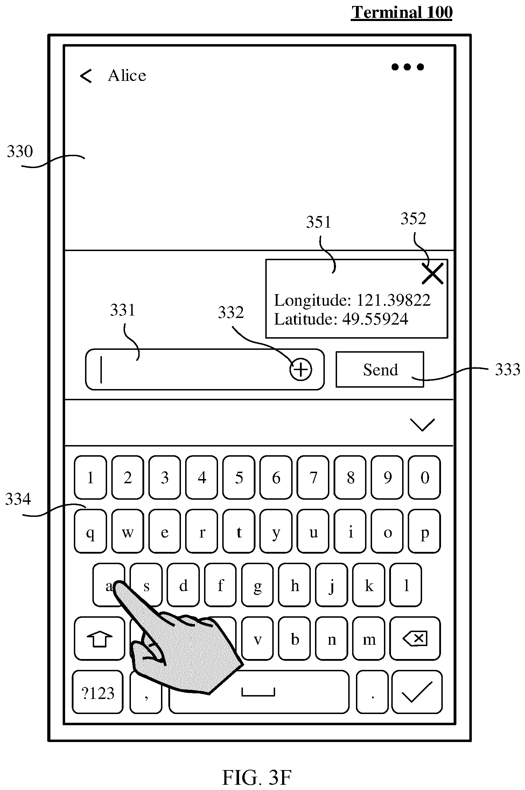

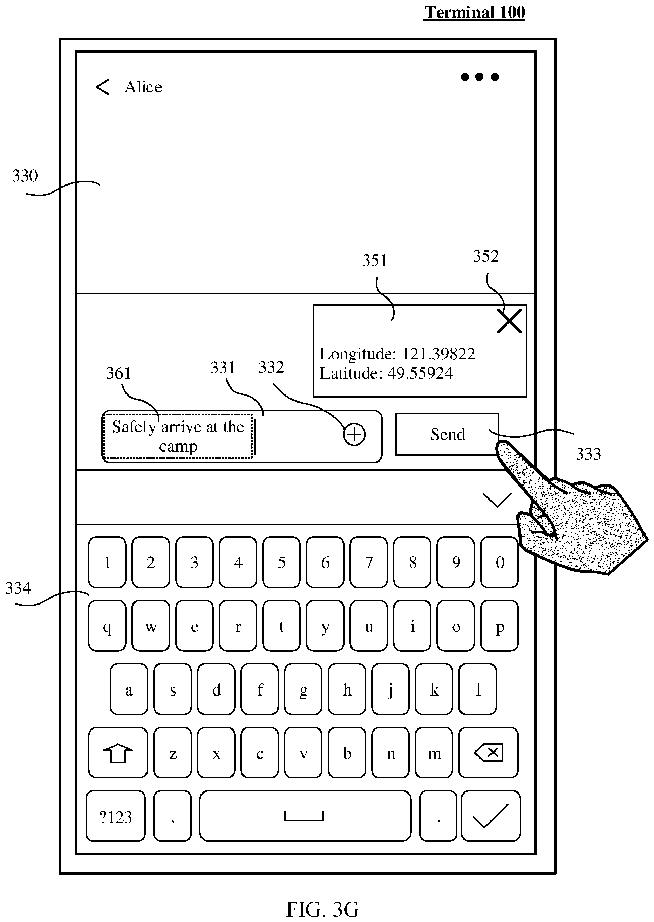

The terminal 100 may receive an input (for example, a tap) of the user for the real-time location icon 341, and in response to the input, the terminal 100 may display a location information box 351 shown in FIG. 3F. The location information box 351 may include the location information of the terminal 100 obtained by using the real-time location icon 341. The location information box 351 may further include a deletion control 352, and the deletion control 352 may be used to cancel adding of the location information displayed in the location information box 351. In this case, the terminal 100 further displays a keyboard display area 334, and the keyboard display area 334 may be used to receive an input of the user, and display content entered by the user in the editing bar 331. As shown in FIG. 3G, the terminal 100 may receive, by using the keyboard display area 334, and display, in the editing bar 331, a text message 361 entered by the user. The text message 361 may be "Safely arrive at the camp".

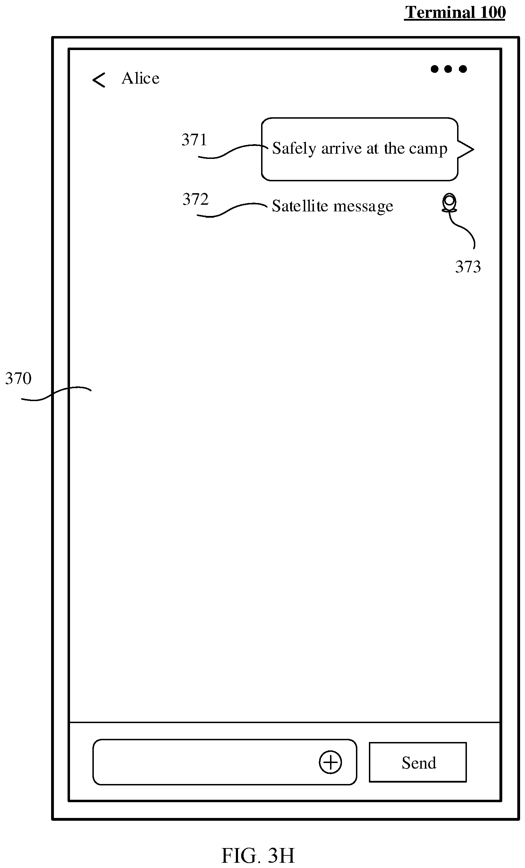

The terminal 100 may receive an input (for example, a tap) of the user for the sending control 333, and in response to the input, the terminal 100 may display an information editing interface 370 shown in FIG. 3H. The information editing interface 370 may include an information box 371 and a location identify 373. The information box 371 may be used to display content that is in the editing bar 331 and that is sent by the user. The location identify 373 may indicate that the BeiDou short message sent by the user further includes the location information. Optionally, the terminal 100 may further display a satellite message identify (for example, a satellite message identify 372), and the satellite message identify may indicate that the message sent by the user is a satellite message. For example, the satellite message identify 372 may indicate that a message corresponding to the information box 371 is a satellite message.

In a possible implementation, after receiving an input of sending a BeiDou short message by a user, the terminal 100 may display a satellite message sending prompt, where the satellite message sending prompt may prompt the user that the terminal 100 is to send a message through a satellite network. The satellite message sending prompt may be one or more of text-type prompt information, picture-type prompt information, and animation-type prompt information. In this way, the user may confirm, by using the satellite message sending prompt, that the terminal is currently in the no-signal state, and the sent message is a satellite message.

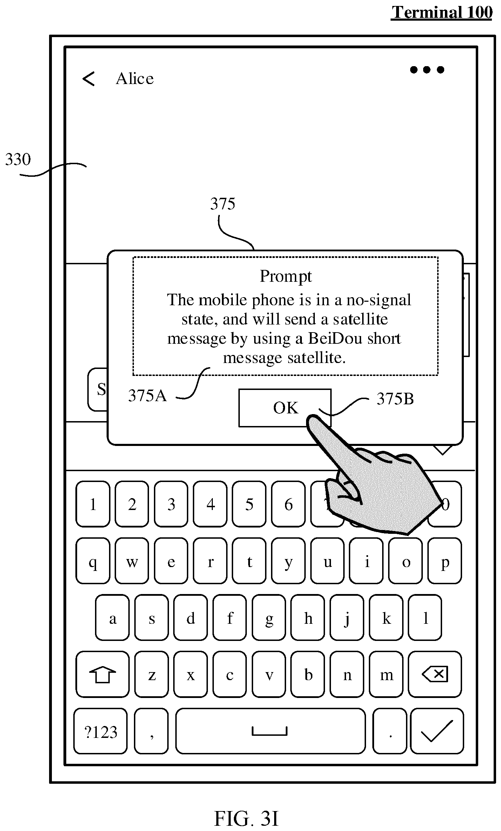

The terminal 100 may receive an input (for example, a tap) of the user for the sending control 333, and in response to the input, the terminal 100 may display a prompt box 375 shown in FIG. 3I. The prompt box 375 may include prompt information 375A and a confirmation control 375B. The prompt information 375A may be used to prompt the user that the message sent by the terminal 100 is a satellite message. For example, the prompt information 375 may be text-type prompt information: "The mobile phone is in a no-signal state, and will send a satellite packet by using a BeiDou short message satellite". The confirmation control 375B may be used to cancel displaying of the prompt box 375. Optionally, the terminal 100 may cancel displaying the prompt box 375 after a time for displaying the prompt box 375 reaches a preset time.

In a possible implementation, the terminal 100 may display a shortcut information display area, and the shortcut information display area may include one or more shortcut information options. Each shortcut information option may be used to trigger the terminal 100 to send a BeiDou short message that includes specified shortcut information content to a specified receiver. Each shortcut information option corresponds to one type of shortcut information content. The shortcut information content may include but is not limited to location information and a text message. In this way, the user can quickly send a BeiDou short message to another user by using shortcut information.

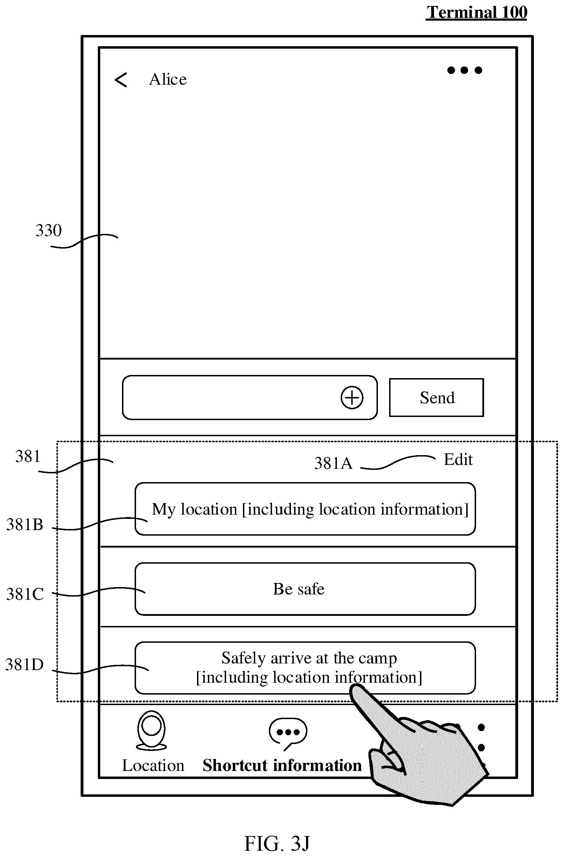

For example, the terminal 100 may receive an input of the user for the shortcut information option 342B shown in FIG. 3E, and in response to the input, the terminal 100 may display a shortcut information display area 381 shown in FIG. 3J. The shortcut information display area 381 may include one or more shortcut information options, for example, a shortcut information option 381B, a shortcut information option 381C, and a shortcut information option 381D. The shortcut information option may be used to trigger the terminal 100 to send shortcut information content corresponding to a shortcut information option to a specified receiver. For example, shortcut information content of the shortcut information option 381B includes a text message "My location" and current location information of the terminal 100. Shortcut information content of the shortcut information option 381C includes a text message "Be safe". Shortcut information content of the shortcut information option 381D includes a text message "Safely arrive at the camp" and the current location information of the terminal 100. Optionally, the shortcut information display area 381 may further include an editing control 381A, and the editing control 381A may be configured to add/delete/edit a shortcut information option and content of the shortcut information option.

Optionally, after receiving the input of the user for the shortcut information option, the terminal 100 may display a text message of shortcut information content of the shortcut information option in the editing bar in response to the input. When the shortcut information content of the shortcut information option includes the location information, the terminal 100 may further display a location information box (for example, the location information box 351) in response to the input. In this way, the user may further edit the shortcut information content.

After the BeiDou network device 200 receives the one or more user frames sent by the terminal 100, the BeiDou network device 200 may determine the frame type of the user frame at the SLC layer based on a subtype indicator field of the one or more user frames. The BeiDou network device 200 may further obtain the MDCP SDU at the SLC layer and the MDCP layer based on the one or more user frames. The BeiDou network device 200 may upload the frame type and the MDCP SDU to the App layer. At the App layer, the BeiDou network device 200 may determine data composition of an application layer packet based on a frame type. That is, after determining, at the SLC layer, that the user frame is a location reporting frame, the BeiDou network device 200 may upload the frame type of the user frame and a location report packet obtained based on the one or more user frames to the App layer. The BeiDou network device 200 may obtain, at the App layer based on data composition indicated by the location reporting frame, a receiver ID, a text message, and location information in the application layer packet, and send the receiver ID, the text message, and the location information to the short message center 25. The short message center 25 may obtain a location message based on the text message and the location information. When the receiver ID indicates that a receiver is a terminal 300, the short message center 25 may send the location message to the terminal 300 based on the receiver ID through a cellular network.

After receiving the location message, the terminal 300 may display the location message, where the location message may include the text message and the location information.

The following describes schematic diagrams of another group of interfaces according to an embodiment of this application.

In a possible implementation, after receiving the location message, the terminal 300 may display a received information prompt, and the received information prompt may be used to prompt a user that a BeiDou short message from the terminal 100 is received.

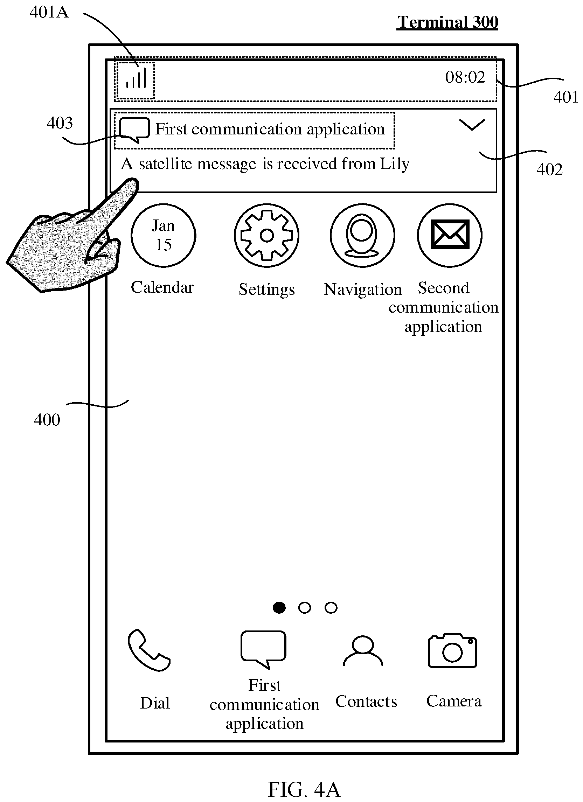

For example, the terminal 300 may display a home screen 400 shown in FIG. 4A. The home screen 400 may include a plurality of application icons, for example, a first communication application icon. The first communication application icon may be used to trigger displaying of an interface of a first communication application, where the first communication application may be used to receive/send a BeiDou short message. For example, the first communication application may be SMS, MeeTime, or the like. Optionally, the plurality of application icons may further include a second communication application icon and a map application icon. A second communication application may be configured to receive/send a BeiDou short message. The second communication application is different from the first communication application. The map application icon may be used to display a map.

A status bar 401 may be further displayed on the home screen 400. A prompt icon 401 A may be displayed in the status bar 401. The prompt icon 401A indicates that the terminal 100 is under a cellular network. In this case, the terminal 100 is in a state where there is a cellular signal.

A received information prompt 402 may be further displayed on the plurality of application icons. The received information prompt 402 may be used to prompt a user that a satellite message from the terminal 100 is received. For example, the received information prompt 402 may include text prompt information: "A satellite message from Lily is received". The received information prompt 402 may further include an application identify 403, and the application identify 403 may indicate application software that displays a satellite message. For example, the application identify 403 may indicate the terminal 300 to receive the satellite message by using the first communication application. In other words, the application identify 403 may prompt the user that the satellite message can be viewed by using the first communication application. After receiving an input (for example, a tap) of the user for the received information prompt 402, the terminal 300 may display, in response to the input, content of the received location message by using the first communication application.

In a possible implementation, the terminal 300 may display the location information of the terminal 100 in a form of a location identify. A map identify may be used to trigger the terminal 300 to display content of the location information. In this way, the user of the terminal 300 may view the location information by using the map identify.

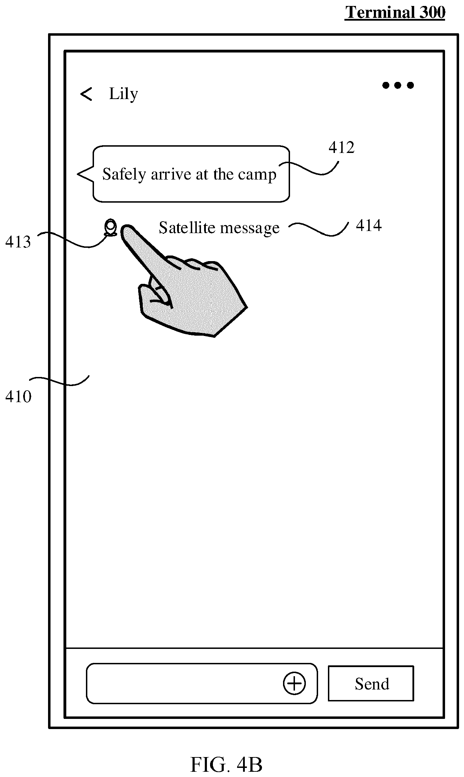

After receiving an input (for example, a tap) of the user for the received information prompt 402 shown in FIG. 4A, the terminal 300 may display, in response to the input, an information editing interface 410 shown in FIG. 4B.

For example, as shown in FIG. 4B, the information editing interface 410 may include an information box 412 and a location identify 413. The information box 412 may be used to display content of the text message in the received location message. For example, the information box 412 may display a text message: "Safely arrive at the camp", and content in the information box 412 is the same as content displayed in the information box 371 shown in FIG. 3H. The location identify 413 may indicate that the received location message further includes location information. Optionally, the terminal 300 may further display a satellite message identify (for example, a satellite message identify 414). The satellite message identify 414 may indicate that the location message corresponding to the information box 412 is a satellite message.

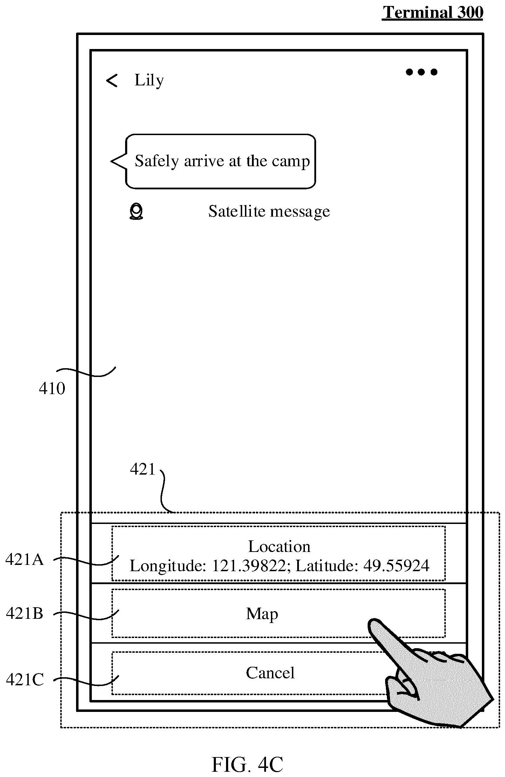

After receiving an input (for example, a tap) of the user for the location identify 413 shown in FIG. 4B, the terminal 300 may display, in response to the input, a location identify area 421 shown in FIG. 4C. The location identify area 421 may include location information 421A. The location information 421A may be used to display detailed content of the received location message. For example, the location information 421A may display longitude information "longitude: 121.39822 degrees" and latitude information "latitude: 49.55924 degrees".

Optionally, the location identify area 421 may further include a map control 421B, and the map control 421B may be used to trigger the terminal 300 to display a map that indicates a location of the terminal 100. Optionally, the location identify area 421 may further include a cancel control 421C, and the cancel control 421C may be used to trigger the terminal 100 to cancel displaying of the location identify area 421.

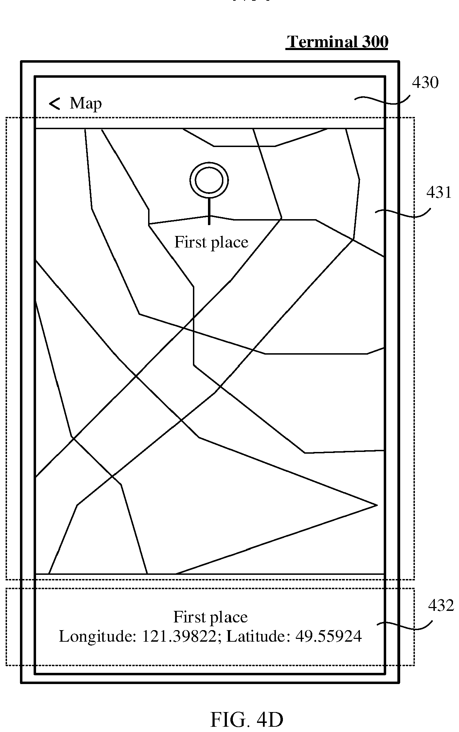

After receiving an input (for example, a tap) of the user for the map control 421B shown in FIG. 4C, the terminal 300 may display, in response to the input, a map interface 430 shown in FIG. 4D. The map interface 430 may include a map display area 431. The location display area 431 may display a first location indicated by a longitude and a latitude in the location information and a map of an area near the first location. The map interface 430 may further include map location information 432. The map location information 432 may be used to display specific values of the longitude and the latitude in the location information.

In a possible implementation, the terminal 300 may display the location information of the terminal 100 in a form of a map.

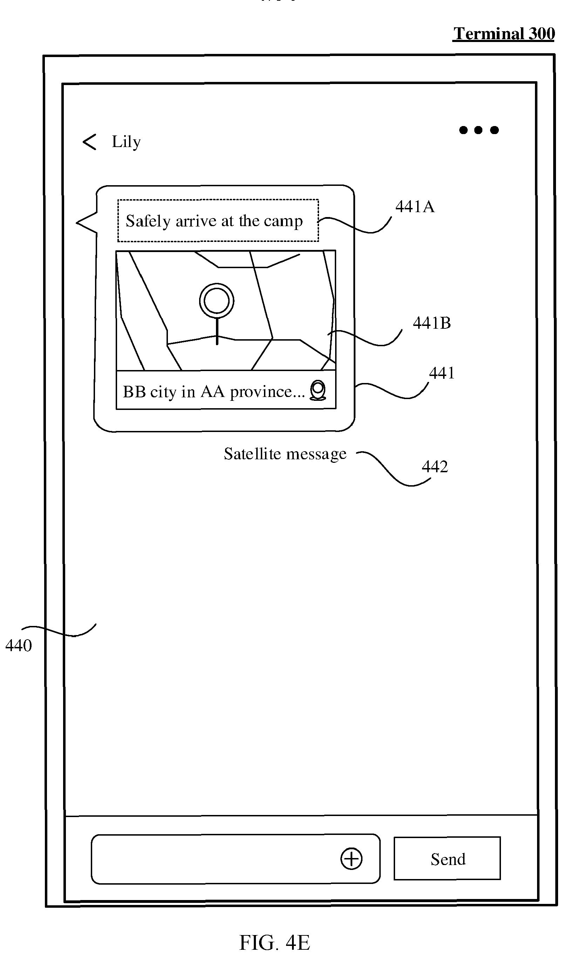

After receiving an input (for example, a tap) of the user for the received information prompt 402 shown in FIG. 4A, the terminal 300 may display, in response to the input, an information editing interface 440 shown in FIG. 4E.

As shown in FIG. 4E, the information editing interface 440 may include an information box 441. The information box 441 may be used to display content in a received location message. The information box 441 may include a text message 441A and a map image 441B. The text message 441A is a text message in the location message. For example, the information box 441A may display a text message: "Safely arrive at the camp", and content of the text message 441A is the same as the content displayed in the information box 371 shown in FIG. 3H. The map image 441B may be used to display the first location indicated by the longitude and the latitude in the location information and a nearby map image. Optionally, the terminal 300 may further display a satellite message identify (for example, a satellite message identify 442). The satellite message identify 442 may indicate that the location message corresponding to the information box 441 is a satellite message.

After receiving an input (for example, a tap) of the user for the map image 441B shown in FIG. 4E, the terminal 300 may display, in response to the input, the map interface 430 shown in FIG. 4D.

In a possible implementation, the terminal 300 may display the location information of the terminal 100 in a form of a text.

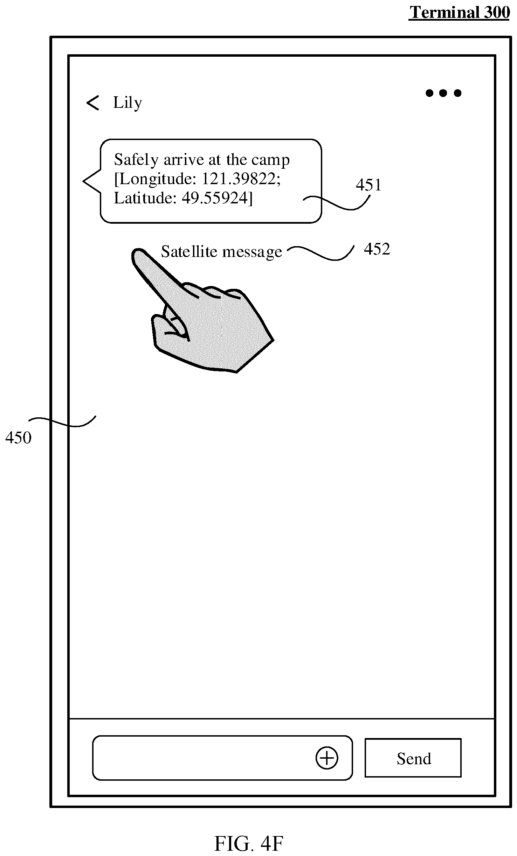

After receiving an input (for example, a tap) of the user for the received information prompt 402 shown in FIG. 4A, the terminal 300 may display, in response to the input, an information editing interface 450 shown in FIG. 4F.

As shown in FIG. 4F, the information editing interface 450 may include an information box 451. The information box 451 may be used to display content in a received location message. The information box 451 may display a text message and location information in the location message. For example, the information box 451 may display: "Safely arrive at the camp [longitude: 121.39822 degrees; latitude: 49.55924 degrees]". Optionally, the terminal 300 may further display a satellite message identify (for example, a satellite message identify 452). The satellite message identify 452 may indicate that the location message corresponding to the information box 451 is a satellite message.

Optionally, after receiving the location message that includes the location information of the terminal 100, the terminal 300 may directly display content of the location message. For example, after receiving a BeiDou short message from the terminal 100, the terminal 300 may display the information editing interface 410 shown in FIG. 4B, the information editing interface 440 shown in FIG. 4E, or the information editing interface 450 shown in FIG. 4F.

In a possible implementation, the terminal 100 may send, by using the second communication application, a BeiDou short message that includes location information. In this way, the terminal 100 may send the location information to the terminal 300 by using different communication applications.

Specifically, the terminal 100 may generate, based on the location information, a text message, a receiver ID, and a sending application, one or more user frames whose frame types are location reporting frames. The user frame includes a receiving application indicator field, and the receiving application indicator field may indicate an application (for example, the first communication application or the second communication application) used by the terminal 100 to send the user frame. The terminal 100 may send the one or more user frames to the BeiDou network device 200.

The following describes schematic diagrams of still another group of interfaces according to an embodiment of this application.

After receiving an input (for example, a tap) of the user for the second communication application icon 304 shown in FIG. 3A, the terminal 100 may display, in response to the input, the second communication application interface 500 shown in FIG. 5A.

As shown in FIG. 5A, the second communication application interface 500 may include a new control 501, and the new control 501 may be used to trigger the terminal 100 to display a contact selection interface 510. The second communication application interface 500 may further display a historical contact entry. The historical contact entry may display information about a historical contact and a recent message record of the historical contact in the second communication application. The historical contact entry may be further used to trigger the terminal 100 to display a letter editing interface with the historical contact.

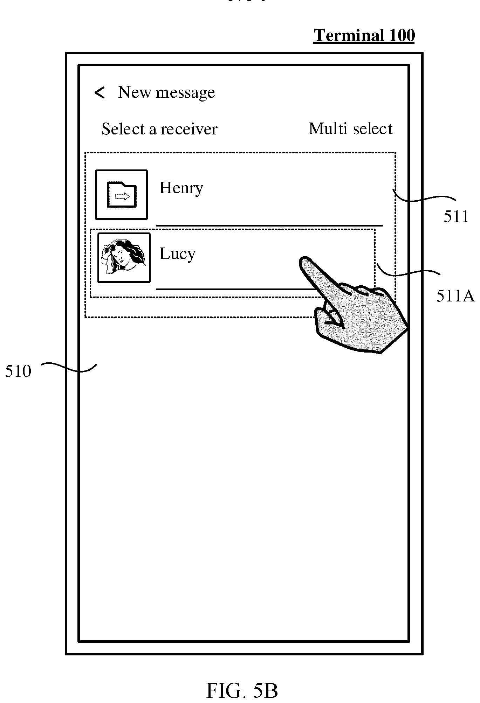

The terminal 100 receives an input (for example, a tap) of the user for the new control 501, and in response to the input, the terminal 100 may display the contact selection interface 510 shown in FIG. 5B. The contact selection interface 510 may display a contact display area 511. The contact display area 511 may display a plurality of contact icons, for example, a contact icon 511 A. The contact icon may be used to trigger displaying of an information editing interface for communicating with a contact corresponding to the contact icon. It should be noted that the contact icon included in the contact display area 511 is an icon corresponding to a contact added in the second communication application of the user.

The terminal 100 receives an input (for example, a tap) of the user for the contact icon 511A, and in response to the input, the terminal 100 may display an information editing interface of a contact "Lucy" corresponding to the contact icon 511A. For descriptions of displaying, by the terminal 100, the information editing interface in the second communication application and sending, by the terminal 100, the location information to the terminal 300 by using the second communication application, refer to embodiments of displaying, by the terminal 100, the interface of the first communication application and sending, by the terminal 100, the location information to the terminal 300 by using the first communication application (namely, embodiments shown in FIG. 3D to FIG. 3J).

After the BeiDou network device 200 receives the one or more user frames sent by the terminal 100, the BeiDou network device 200 may obtain an application layer packet based on the one or more user frames, and determine a frame type of the user frame based on a subtype indicator field of the one or more user frames. The BeiDou network device 200 may determine, based on the frame type, data composition of original data in the application layer packet. In other words, after determining that the user frame is a location reporting frame, the BeiDou network device 200 may obtain, based on the data composition indicated by the location reporting frame, the receiver ID, the text message, the location information in the application layer packet, and a receiving application indicator. The BeiDou network device 200 may determine a receiving communication application (for example, the first communication application or the second communication application) based on the receiving application indicator. That is, the BeiDou network device 200 may determine an application server (also referred to as a first receiving server), for example, a short message center 25 or a third-party communication server 60, based on the receiving application indicator. The BeiDou network device 200 may send the receiver ID, the text message, and the location information to a determined application server. The application server may obtain a location message based on the text message and the location information. When the receiver ID indicates that a receiver is the terminal 300, the application server may send the location message to the terminal 300 based on the receiver ID through a cellular network.

The terminal 300 may display and receive prompt information, where the received prompt information may be used to prompt the user that a received satellite message may be viewed in a specified application.

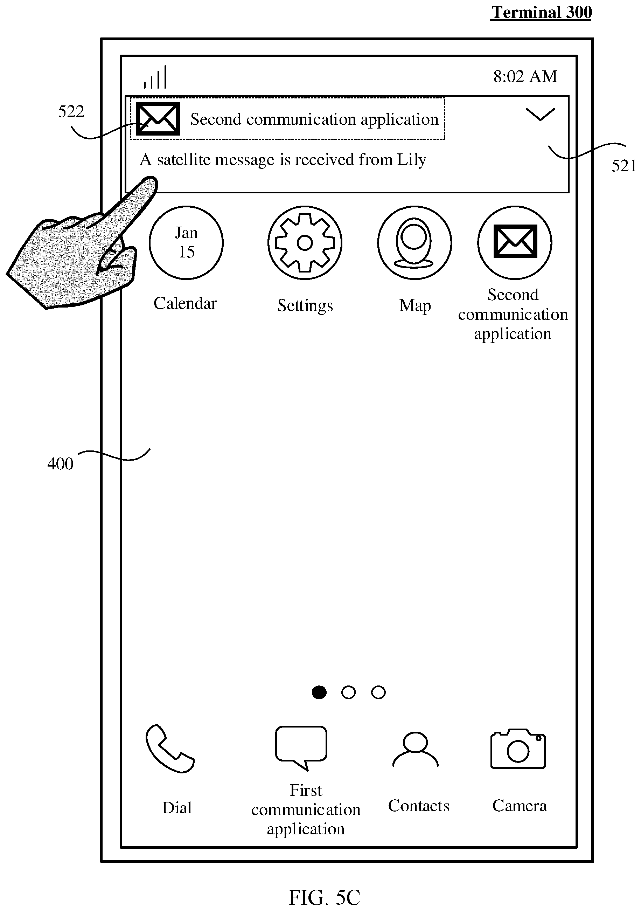

For example, as shown in FIG. 5C, the terminal 300 displays a home screen 400. A received information prompt 521 may be displayed on the home screen 400. The received information prompt 521 may be used to prompt a user that a satellite message from the terminal 100 is received. For example, the received information prompt 521 may include text prompt information: "A satellite message from Lily is received". The received information prompt 521 may further include an application identify 522, and the application identify 522 may indicate application software that displays a satellite message. For example, the application identify 522 may indicate the terminal 300 to receive the satellite message by using the second communication application. In other words, the application identify 522 may prompt the user that the satellite message can be viewed by using the second communication application. After receiving an input (for example, a tap) of the user for the received information prompt 522, the terminal 300 may display, in response to the input, content of the received location message by using the second communication application. For detailed descriptions of displaying, by the terminal 300, the content of the location message by using the second communication application, refer to the foregoing embodiments of displaying, by the terminal 300 by using the first communication application, the content of the location message shown in FIG. 4B to FIG. 4F. Details are not described herein again.

In a possible implementation, the terminal 100 may display a BeiDou communication control. The BeiDou communication control may be used to trigger the terminal 100 to enable a BeiDou communication function. After the terminal 100 enables the BeiDou communication function, the terminal 100 may communicate with another terminal by using the BeiDou network device 200. In this way, the user may actively enable or disable the BeiDou communication function, and send or receive a satellite message when the BeiDou communication function is enabled.

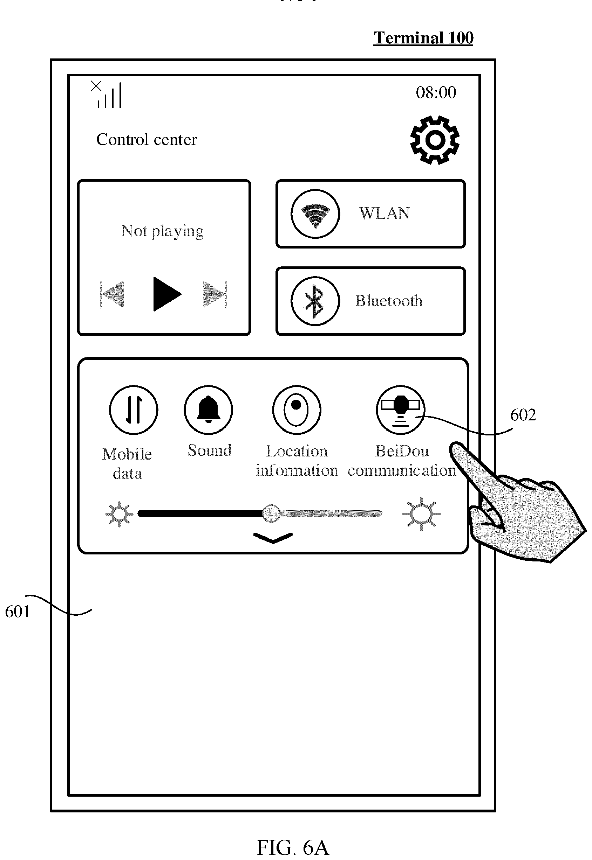

For example, the terminal 100 may receive an input (for example, sliding down from the top) of the user for the home screen 301 shown in FIG. 3A, and display, in response to the input, a drop-down notification bar 601 shown in FIG. 6A. The drop-down notification bar 601 includes a plurality of function controls, and each function control may be used to trigger the terminal 100 to enable a response function. The plurality of function controls include a BeiDou communication function control 602. The BeiDou communication function control 602 may be used to trigger the terminal 100 to enable the BeiDou communication function, and the terminal 100 may send/receive a BeiDou short message by using the BeiDou network device 200.

Optionally, the BeiDou communication function control 602 may be used to trigger the terminal 100 to display a BeiDou communication icon. The BeiDou communication icon may be used to prompt the user that the terminal 100 can send/receive a satellite message.

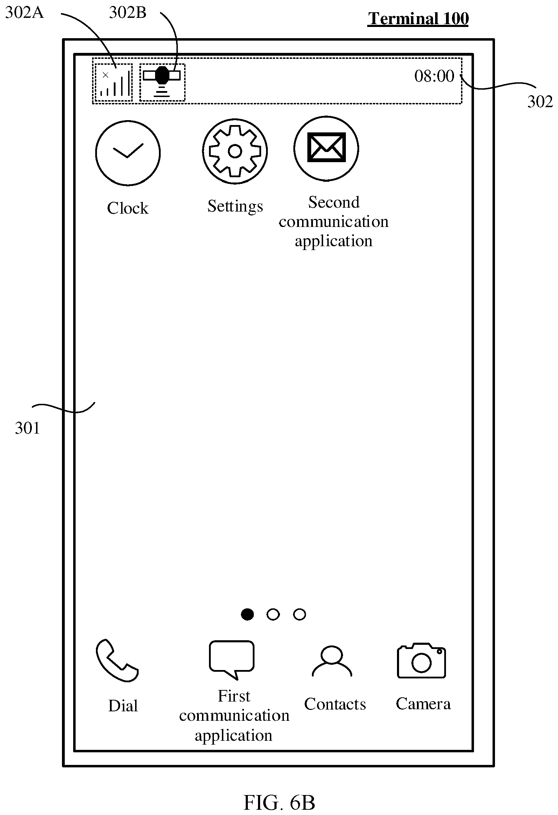

The terminal 100 may receive an input (for example, a tap) of the user for the BeiDou communication function control 602 shown in FIG. 6A, and display, in response to the input, a BeiDou communication icon 302B shown in FIG. 6B. The BeiDou communication icon 302B is used to prompt the user that the terminal 100 has enabled the BeiDou communication function, to send/receive a BeiDou short message by using the BeiDou network device 200.

In some application scenarios, the terminal 100 may generate a location report packet based on location information of a specified location and a receiver ID, and split the location report packet to obtain one or more first user frames. The first user frame includes a first subtype indicator field, and the first subtype indicator field indicates that the first user frame is a location reporting frame. After receiving the one or more first user frames, the BeiDou network device 200 may obtain the location information and the receiver ID from the first or more first user frames based on the first subtype indicator field. The BeiDou network device 200 may determine, based on the receiver ID, a terminal that receives the location information, and send, by using the short message center 25, the location information to a terminal (for example, the terminal 300) under a cellular network indicated by the receiver ID, and the terminal may display the location information. In this way, the terminal 100 under the BeiDou network may share the location information with the called terminal under the cellular network.

Optionally, the location report packet may further include a text message field, and the text message field includes message data entered by the user. Optionally, the location report packet may further include a fixed text field, the fixed text field includes an identity of a specified text message, and the identity of the specified text message corresponds to one specified text message. The BeiDou network device 200 or the terminal 300 may obtain a specified text message by using a fixed text field.

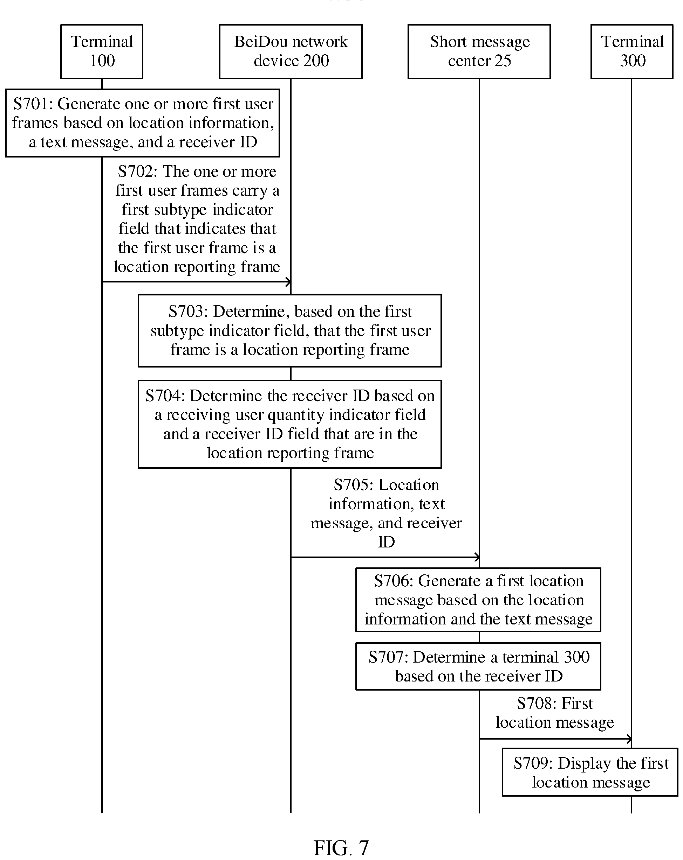

FIG. 7 is a schematic flowchart of a location reporting method in a BeiDou communication system according to an embodiment of this application.

As shown in FIG. 7, the method includes the following steps.

S701: A terminal 100 generates one or more first user frames based on location information, a text message, and a receiver ID.

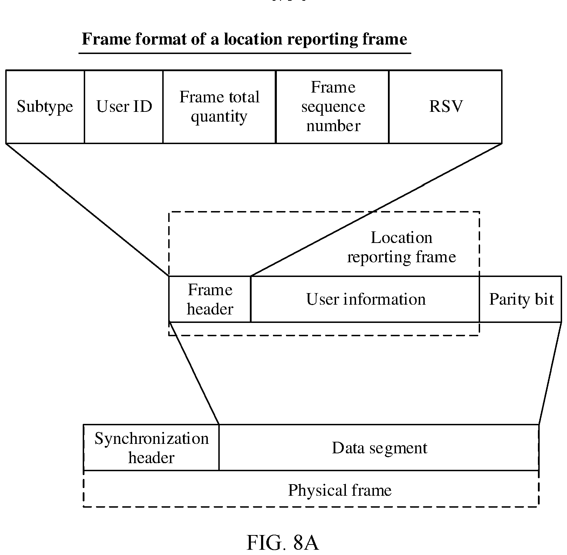

Specifically, the terminal 100 may use the location information, the text message, and the receiver ID as original data, and obtain an application layer packet based on the original data. For detailed descriptions of obtaining, by the terminal 100, the first user frame based on the original data, refer to the embodiment shown in FIG. 2A-1 and FIG. 2A-2. Details are not described herein again. Frame header information of the first user frame includes a first subtype indicator field. The first subtype indicator field indicates that the first user frame is a location reporting frame. For a frame format of the location reporting frame, refer to FIG. 8A. The first user frame is an SLC PDU at an SLC layer.

As shown in FIG. 8A, a physical frame may include a synchronization header and a data segment. The synchronization header may be used by a BeiDou network device 200 to synchronize an inbound physical frame and identify a start location of a data segment. A time length of the synchronization header may be 40 ms.

The data segment may include a user frame and a parity bit. The parity bit may be used to check the data segment, and the parity bit may include a CRC check code. The user frame is a location reporting frame, and may include frame header information (also referred to as frame format indicator information) and user information. The frame header information may include but is not limited to a subtype indicator field, a user ID field, a frame total quantity field, a frame sequence number field, a reserved (reserve, RSV) field, and the like.

The subtype indicator field may indicate a frame type of a user frame. A data length of the subtype indicator field may be three bits. A subtype of the user frame may include a general data frame (or may be referred to as an information packet frame), an ACK frame, a receipt frame, a location reporting frame, an emergency rescue frame, and the like. A subtype of the location reporting frame is a location reporting frame, and a subtype of the emergency rescue frame is an emergency rescue frame.

The user ID field may indicate a device identity of the terminal 100. A data length of the user ID field may be 34 bits.

The frame total quantity field may indicate a total quantity of location reporting frames included in an SLC SDU in which the location reporting frame is located. A length of the frame total quantity field may be two bits. When the length of the frame total quantity field is two bits, one SLC SDU may include a maximum of four location reporting frames.

The frame sequence number field may indicate a sequence of the location reporting frame in an SLC SDU. A length of the frame sequence number field may be two bits.

The reserved (RSV) field can be reserved for protocol extension. A data length of the reserved field may be three bits.

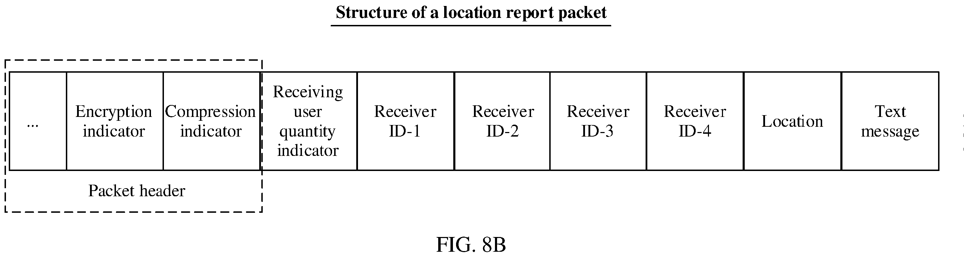

User information of one or more location reporting frames may include a location report packet. For a structure of the location report packet, refer to FIG. 8B. Specifically, after generating the location report packet, the terminal 100 may deliver a frame type of the location report packet to the SLC layer. The terminal 100 may further split the location report packet into one or more location reporting frames at an MDCP layer and the SLC layer. It may be understood that the first subtype indicator field in the location reporting frame is obtained by the terminal 100 at the SLC layer based on a frame type delivered by an application layer. For detailed descriptions of obtaining one or more location reporting frames based on a location report packet, refer to the embodiment shown in FIG. 2A-1 and FIG. 2A-2. Details are not described herein again.

As shown in FIG. 8B, a location report packet may include a packet header and original data. For descriptions of the packet header, refer to the embodiment shown in FIG. 2A-1 and FIG. 2A-2, and details are not described herein again. The packet data may include but is not limited to a receiving user quantity indicator field, a receiver ID-1 field, a receiver ID-2 field, a receiver ID-3 field, a receiver ID-4 field, a location field, and a text message field.

The receiving user quantity indicator field may indicate a quantity of receivers of the location report packet. Receiver ID fields (including the receiver ID-1 field, the receiver ID-2 field, the receiver ID-3 field, and the receiver ID-4 field) indicate a receiver ID of the location reporting frame. For example, the receiver ID may be a mobile phone number of a receiver. A data length of the receiving user quantity indicator field may be two bits. A quantity of the receiver ID fields is not limited to 4, and may be greater or less. When the quantity of the receiver ID fields is greater or less, a data length of the receiving user quantity indicator field is also longer or shorter. A data length of the receiver ID fields may be 34 bits. For example, when a quantity of receivers is one, the location reporting frame includes one receiver ID field, namely, the receiver ID-1 field, and a value of the receiving user quantity indicator field may be a value N1. When a quantity of receivers is two, the location reporting frame includes two receiver ID fields, namely, the receiver ID-1 field and the receiver ID-2 field. A value of the receiving user quantity indicator field may be a value N2, and N2 and N1 are different. Specifically, N1 may be 00, and N2 may be 01. Herein, this embodiment of this application is written by using an example in which the quantity of receivers is 1, and the receiver ID field indicates the terminal 300.

The location field may indicate location information of a specified location. The location information of the specified location may be information about a current location of the terminal 100, and the location information may include a longitude and a latitude of the current location of the terminal 100. The terminal 100 may obtain current location information of the terminal 100 based on a satellite navigation system, for example, a global navigation satellite system (global navigation satellite system, GNSS) or a BeiDou navigation satellite system (BeiDou navigation satellite system, BDS).

In some embodiments, the location information of the specified location may be historical location information stored by a user, or may be location information of a specified location of a specified place that is searched or set by a user.

For example, a data length of the location field may be 47 bits, and specific composition is shown in the following Table 1:

**Table 1**

| Location field | | | | | |
|---|---|---|---|---|---|
| Longitude | | | Latitude | | |
| Sign bit (one bit) | | Longitude value (23 bits) | Sign bit (one bit) | | Latitude value (22 bits) |
| 0: east longitude | 1: west longitude | 0-648000 (Unit: arc second) | 0: north latitude | 1: south latitude | 0 to 324000 (Unit: arc second) |

As shown in Table 1, the location field may include a longitude field and a latitude field. A length of the longitude field may be 24 bits. A length of the latitude field may be 23 bits.

The longitude field may include a sign bit field and a longitude value field. A length of the sign bit field may be one bit, and a length of the longitude value field may be 23 bits. When the sign bit field is a value S1, it indicates an east longitude. When the sign bit field is a value S2, it indicates west longitude. The value S1 is different from the value S2. Specifically, the value S1 may be 0, and the value S2 may be 1. Optionally, the value S1 may be 1, and the value S2 may be 0. The longitude value field indicates that the longitude value ranges from 0 to 648000. A scale factor is 0.1, and a unit is arc second.

The latitude field may include a sign bit field and a latitude value field. A length of the sign bit field may be one bit, and a length of the latitude value field may be 22 bits. When the sign bit field is a value T1, it indicates a north latitude. When the sign bit field is a value T2, it indicates south latitude. The value T1 is different from the value T2. Specifically, the value T1 may be 0, and the value T2 may be 1. Optionally, the value T1 may be 1, and the value T2 may be 0. The latitude value field indicates that the longitude value ranges from 0 to 324000. A scale factor is 0.1, and a unit is arc second.

Further, the length of the location field may be 61 bits, and the location field may include the longitude field and the latitude field, and may further include a height field. The height field may represent a height value (namely, an altitude value) of the terminal 100. A length of the height field may be 14 bits. A valid value range is [0,16384], and a unit is meter. The terminal 100 may obtain height information in a plurality of manners. For example, after determining a longitude and a latitude of the terminal 100, the terminal 100 may calculate height information based on a prestored earth model. For another example, the terminal 100 may obtain height information of the terminal 100 by using a sensor (for example, a barometer).

It may be understood that the length of the location field may alternatively be another value. This is not limited herein. The location field may further include another field, for example, a name field of an address corresponding to a longitude, a latitude, and a height.

The text message field may indicate that the location report packet carries a text message. A data length of the text message is not limited. The text message may be message data entered by a user. Alternatively, the text message may be preset or preset text information.

In a possible implementation, a length of the text message field does not exceed a preset length (for example, 522 bits). In this way, the terminal 100 may encapsulate the location report packet into one location reporting frame.

In a possible implementation, the location report packet may further include a fixed text field, and the fixed text field may indicate an identity of a specified text message. A length of the fixed text field may be five bits. For example, when a value of the fixed text field is Q1, that is, the identity of the specified text message is Q1, the specified text message corresponding to the identity may be text message content "Be safe" of the shortcut information option 381C shown in 3J.

In some embodiments, the BeiDou network device 200 may store the identity of the specified text message, the content of the specified text message corresponding to the identity, and a correspondence between the identity of the specified text message and the content of the specified text message corresponding to the identity. The BeiDou network device 200 may obtain the content of the specified text message based on the fixed text field, and send the specified text message to a terminal indicated by a receiver ID.

In some other embodiments, the BeiDou network device 200 may send the fixed text field to a terminal indicated by a receiver ID. The terminal (for example, the terminal 300) indicated by the receiver ID may store the identity of the specified text message, the content of the specified text message corresponding to the identity, and the correspondence between the identity of the specified text message and the content of the specified text message corresponding to the identity. The terminal indicated by the receiver ID may obtain the content of the specified text message through the fixed text field. The terminal may further display the content of the specified text message.

Optionally, the terminal 100 may generate one or more location reporting frames based on location information and a receiver ID. A location report packet included in the one or more location reporting frames may not carry a text message field and/or a fixed text field.

It should be noted that when a value of the fixed text field is a specified value, the fixed text field indicates that there is no corresponding specified text message, where the specified value is different from Q1. For example, when determining that the value of the fixed text field is the specified value, the BeiDou network device 200 may determine that there is no corresponding specified text message, and send the location information only to the terminal indicated by the receiver ID. It may be understood that, if the location report packet received by the BeiDou network device 200 further carries a text message field, the BeiDou network device 200 may further send a text message in the text message field to the terminal indicated by the receiver ID. For another example, after the terminal 300 receives a fixed text field and determines that a value of the fixed text field is a specified value, the terminal 300 may determine that the terminal 100 does not send a specified text message.

In a possible implementation, the location report packet may further include a data format indicator field, and the data format indicator field may indicate how the BeiDou network device 200 parses a fixed text field and a text message field that are in the location report packet.

For example, a length of the data format indicator field may be one bit. When a value of the data format indicator field is 0, the location report packet includes only a fixed text field. When a value of the data format indicator field is 1, the location report packet includes only a text message field.

For another example, a length of the data format indicator field may be two bits. When a value of the data format indicator field is 00, the location report packet neither includes a fixed text field nor includes a text message field. When a value of the data format indicator field is 01, the location report packet includes only a fixed text field. When a value of the data format indicator field is 10, the location report packet includes only a text message field. When a value of the data format indicator field is 11, the location report packet includes both a fixed text field and a text message field, where a length of the fixed text field is a fixed value, and lengths of fixed text fields in the terminal 100 and the BeiDou network device 200 are the same.

S702: The terminal 100 sends the one or more first user frames to the BeiDou network device 200, where the first user frame carries a first subtype indicator field that indicates that the first user frame is a location reporting frame.

Specifically, for detailed descriptions of sending, by the terminal 100, the one or more first user frames to the BeiDou network device 200, refer to the embodiment shown in FIG. 2A-1 and FIG. 2A-2. Details are not described herein again.

In some embodiments, after receiving a first input of the user, the terminal 100 may generate, in response to the first input, the one or more first user frames, and send the one or more first user frames to the BeiDou network device 200. The first input is not limited to tapping, double tapping, touching and holding, sliding, a voice instruction input, and the like. For example, the first input may be an input for the sending control 333 shown in FIG. 3G. For another example, the first input may be an input for the shortcut information option shown in FIG. 3J. In some application scenarios, the first input may alternatively be a set of user operations.

In some other embodiments, the terminal 100 may generate and send the one or more first user frames to the BeiDou network device 200 at an interval of a preset time (for example, half an hour).

S703: The BeiDou network device 200 determines, based on the first subtype indicator field, that the first user frame is a location reporting frame.

After receiving the one or more first user frames, the BeiDou network device 200 may determine, at an SLC layer based on a first subtype indicator field in frame header information, that the first user frame is a location reporting frame, and then obtain, based on the one or more first user frames, an application layer packet including location information.

It should be noted that the BeiDou network device 200 may obtain a frame type of the one or more first user frames at the SLC layer by using the first subtype indicator field, and upload the frame type to an App layer. The BeiDou network device 200 may obtain an MDCP SDU at the SCL layer and the MDCP layer based on the one or more first user frames. The BeiDou network device 200 may upload the MDCP SDU to the App layer, and use the MDCP SDU as an application layer packet of the App layer, namely, a location report packet.

S704: The BeiDou network device 200 determines the receiver ID based on a receiving user quantity indicator field and a receiver ID field that are in the location reporting frame.

The BeiDou network device 200 may obtain a receiving user quantity indicator field from the application layer packet. The BeiDou network device 200 may determine a quantity of receivers, namely, a quantity of receiver ID fields, based on the receiving user quantity indicator field. The BeiDou network device 200 may determine the receiver ID based on the receiver ID field. For example, when the BeiDou network device 200 determines, based on the receiving user quantity indicator field, that the quantity of receivers is 1, the BeiDou network device 200 determines one receiver ID based on a receiver ID-1 field. For another example, when the BeiDou network device 200 determines, based on the receiving user quantity indicator field, that the quantity of receivers is 2, the BeiDou network device 200 determines one receiver ID based on a receiver ID-1 field, and then determines one receiver ID based on a receiver ID-2 field. The two receiver IDs are different.

The BeiDou network device 200 may further obtain the location information from the location field in the application layer packet, and obtain the text message from the text message field.

S705: The BeiDou network device 200 sends the location information, the text message, and the receiver ID to a short message center 25.

In some embodiments, the BeiDou network device 200 may generate a location report message in a specified format based on the location information and the text message, and then send the location report message and the receiver ID to the short message center 25.

For example, a format of the location report message may be:
[Longitude: longitude value, latitude: latitude value] + text message

Both the longitude value and the latitude value are measured in a unit of arc second.

For another example, when the location information includes height information, a format of the location report message may be:
[Longitude: longitude value, latitude: latitude value, height: height value] + Text message

A unit of the longitude value and a unit of the latitude value are both an arc second, and a unit of the height value is a meter.

In some embodiments, the location information includes only latitude and longitude information. The BeiDou network device 200 may obtain height information based on a map resource package (including a latitude and a longitude and corresponding information such as an altitude and a geographical name) and latitude and longitude information, and forward the latitude information, the longitude information, and the height information to the short message center 25.

S706: The short message center 25 generates a first location message based on the location information and the text message.

The short message center 25 may generate the first location message based on the received location information and text message. The first location message is encapsulated by the short message center 25 according to a cellular network protocol format.

In some embodiments, the short message center 25 receives the location report message sent by the BeiDou network device 200, and the short message center 25 may obtain the location information and the text message based on the location report message, and then generate the first location message based on the location information and the text message.

Optionally, when the location information received by the short message center 25 includes only longitude information and latitude information, the short message center 25 may determine height information by using a prestored map resource package or a map server, and generate the first location message based on the longitude, the latitude, the height, and the text message.

Optionally, the short message center 25 may determine, based on the location information by using the prestored map resource package or the map server, a map area (for example, a map in a specified range in which the terminal 100 is the center) indicated by the location information sent by the terminal 100. The short message center 25 may generate a first location message by using an image (also referred to as a first map image) of the map area and the text message. It should be noted that the location information may include the height information, or may not include the height information. When the location information includes the height information, the short message center 25 may not obtain the height information. When the location information does not include the height information, the short message center 25 may obtain the height information based on the foregoing prestored map resource package or the map server. Optionally, the first location message may include latitude information and longitude information. Optionally, the first position message may further include height information.

S707: The short message center 25 determines the terminal 300 based on the receiver ID.

The short message center 25 may determine a receiver based on the received receiver ID. It should be noted that, when determining that there are a plurality of receivers, the BeiDou network device 200 may send receiver IDs, location information, and a text message that correspond to the plurality of receivers to the short message center 25. The short message center 25 may determine the plurality of receivers based on the plurality of receivers IDs, and send the first location message to the plurality of receivers. The location information and the text message obtained by any receiver in the plurality of receivers are the same.

Herein, this embodiment of this application is written by using an example in which the short message center 25 receives one receiver ID and the receiver ID indicates that the receiver is the terminal 300.

S708: The short message center 25 sends the first location message to the terminal 300.

The short message center 25 sends the first location message to the terminal 300 through a cellular network.

S709: The terminal 300 displays the first location message.

After receiving the first location message, the terminal 300 may display the first location message in different forms (for example, a text form or a map form).

In some embodiments, the first location message received by the terminal 300 includes latitude information and longitude information, and the terminal 300 may display the latitude information and the longitude information in a text form. For example, refer to the embodiment shown in FIG. 4F. Details are not described herein again. Optionally, the first location message further includes height information, and the terminal 300 may further display both the latitude information, the longitude information, and the height information in a text form. Further, optionally, the first location message does not include the height information, and the terminal 300 may obtain the height information by using a prestored map resource package or a map server.

In some other embodiments, the first location message received by the terminal 300 includes latitude information and longitude information. The terminal 300 may convert, based on the latitude information and the longitude information by using a prestored map resource package or a map server, the latitude information and the longitude information into a first map image including a location corresponding to a latitude and a longitude, and display the location information in a form of an image. For example, refer to embodiments shown in FIG. 4D and FIG. 4E. Details are not described herein again.

In some other embodiments, the first location message received by the terminal 300 includes a first map image. The terminal 300 may display the location information in a form of an image. For example, refer to the embodiment shown in FIG. 4E. Details are not described herein again. It should be noted that when the terminal 300 does not support displaying the first map image in a form of an image, the terminal 300 may display the location information in a form of a text.

In some other embodiments, the terminal 300 may display the location information in a form of a location identify. Specifically, refer to the embodiment shown in FIG. 4B. Details are not described herein again.

It should be noted that the manner in which the terminal 300 displays the location information is only an example, and location information shared by the terminal 100 of the terminal 300 may be notified in another form (for example, in a form of voice broadcast). This is not limited in this application.

In a possible implementation, the terminal 100 may indicate a frame type of a user frame by using a synchronization header field. In this way, the BeiDou network device 200 can determine the frame type of the user frame at the physical layer, and can parse a location reporting frame more quickly.

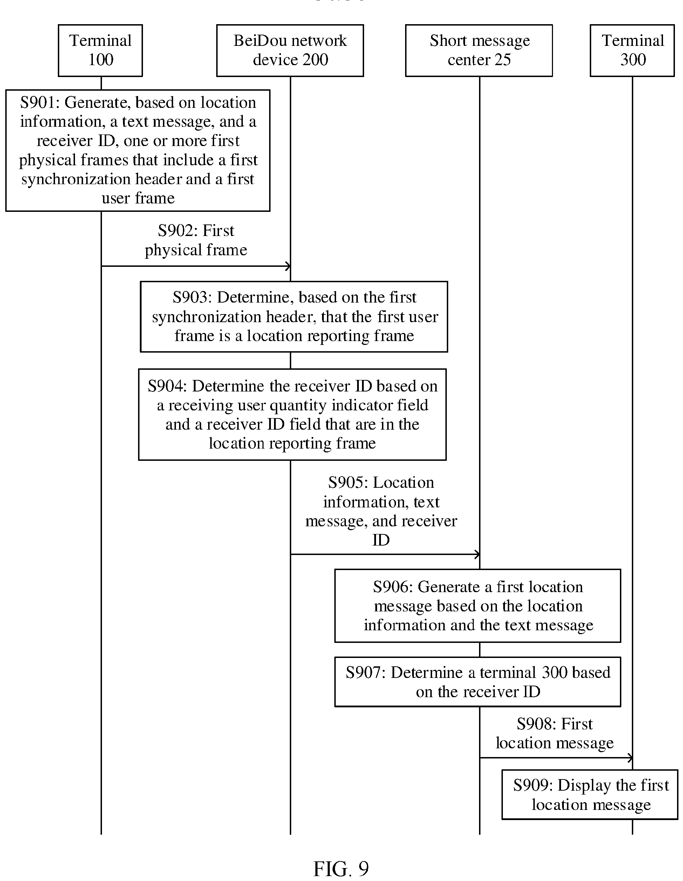

FIG. 9 is a schematic flowchart of another location reporting method in a BeiDou communication system according to an embodiment of this application.

As shown in FIG. 9, the method includes the following steps.

S901: A terminal 100 generates, based on location information, a text message, and a receiver ID, one or more first physical frames that include a first synchronization header and a first user frame.

Specifically, the terminal 100 may use the location information, the text message, and the receiver ID as original data, and obtain an application layer packet based on the original data. For detailed descriptions of obtaining, by the terminal 100, the first user frame based on the original data, refer to the embodiment shown in FIG. 2A-1 and FIG. 2A-2. Details are not described herein again. A physical frame may include a synchronization header and a data segment. The synchronization header may be further used by a BeiDou network device 200 to determine a frame type of the first user frame.

For example, a length of the synchronization header may be 40 bits, as shown in Table 2:

**Table 2: Data frame service and synchronization header correspondence table**

| Frame type | Synchronization header symbol |
|---|---|
| Emergency rescue frame | 1111111010110001110011011100100111100001 |
| Location reporting frame | 1010010001111100110101000111011001011101 |
| General data frame | 1101100000011011100101101011001001000101 |
| Reserved | 0001001111001111101111010111010000100011 |
| Reserved | 1001001100100010100100111011110110010111 |

Table 2 shows an example of a symbol sequence of synchronization headers of user frames of different types. Each symbol sequence corresponds to a user frame of one frame type. Synchronization header symbol sequences of the emergency rescue frame, the location reporting frame, and the general data frame are different. A reserved synchronization header symbol sequence is an unused symbol sequence, and the reserved synchronization header symbol sequence may be provided for use of a user frame of another frame type that is subsequently added, or may be provided for lengthening of a synchronization header symbol sequence of a conventional user frame. It should be noted that, when a symbol sequence in a synchronization header received by the BeiDou network device 200 is incomplete, the BeiDou network device 200 may restore a complete synchronization header symbol sequence through correlation comparison, and determine a frame type of a user frame based on the synchronization header.

It should be further noted that, herein, a subtype indicator field of a user frame may indicate another frame type other than the emergency rescue frame, the location reporting frame, and the general data frame. For a frame format of the location reporting frame and a structure of user information, refer to embodiments shown in FIG. 8A and FIG. 8B. Details are not described herein again.

Optionally, the location reporting frame may not include a subtype indicator field.

S902: The terminal 100 sends one or more first physical frames to the BeiDou network device 200.

Specifically, for detailed descriptions of sending, by the terminal 100, the one or more first physical frames to the BeiDou network device 200, refer to the embodiment shown in FIG. 2A-1 and FIG. 2A-2. Details are not described herein again.

In some embodiments, after receiving a first input of a user, the terminal 100 may generate, in response to the first input, the one or more first physical frames, and send the one or more first physical frames to the BeiDou network device 200. For descriptions of the first input, refer to the embodiment shown in FIG. 7. Details are not described herein again.

In some other embodiments, the terminal 100 may generate and send the one or more first physical frames to the BeiDou network device 200 at an interval of a preset time (for example, half an hour).

S903: The BeiDou network device 200 determines, based on the first synchronization header, that the first user frame is a location reporting frame.

After receiving the one or more first physical frames, the BeiDou network device 200 may determine, at the PHY layer based on the symbol sequence of the synchronization header, that the first user frame in the first physical frame is a location reporting frame, and then obtain, based on the one or more first physical frames, the application layer packet including the location information.

S904: The BeiDou network device 200 determines the receiver ID based on a receiving user quantity indicator field and a receiver ID field that are in the location reporting frame.

For detailed descriptions of determining, by the BeiDou network device 200, the receiver ID, the location information, and the text message based on the location reporting frame, refer to the embodiment shown in FIG. 7. Details are not described herein again.

S905: The BeiDou network device 200 sends the location information, the text message, and the receiver ID to a short message center 25.

S906: The short message center 25 generates a first location message based on the location information and the text message.

S907: The short message center 25 determines a terminal 300 based on the receiver ID.

S908: The short message center 25 sends the first location message to the terminal 300.

S909: The terminal 300 displays the first location message.

For detailed descriptions of step S905 to step S909, refer to the embodiment shown in FIG. 7. Details are not described herein again.

In a possible implementation, user information of the one or more first user frames generated by the terminal 100 includes an application layer packet, the application layer packet further includes a receiving application indicator field, and the receiving application indicator field may indicate an application that receives the location information. After determining, by using a first subtype indicator, that the first user frame is a location reporting frame, the BeiDou network device 200 may determine the receiver ID based on a receiver ID field in the location reporting frame, and determine a first receiving server based on the receiving application indicator field. The BeiDou network device 200 may send the location information, the text message, and the receiver ID to the first receiving server. The first receiving server may generate the first location message based on the location information and the text message, and send the first location message to a called terminal (for example, the terminal 300) based on the receiver ID. In this way, the called terminal (for example, the terminal 300) may successfully receive and display the location information of the terminal 100.

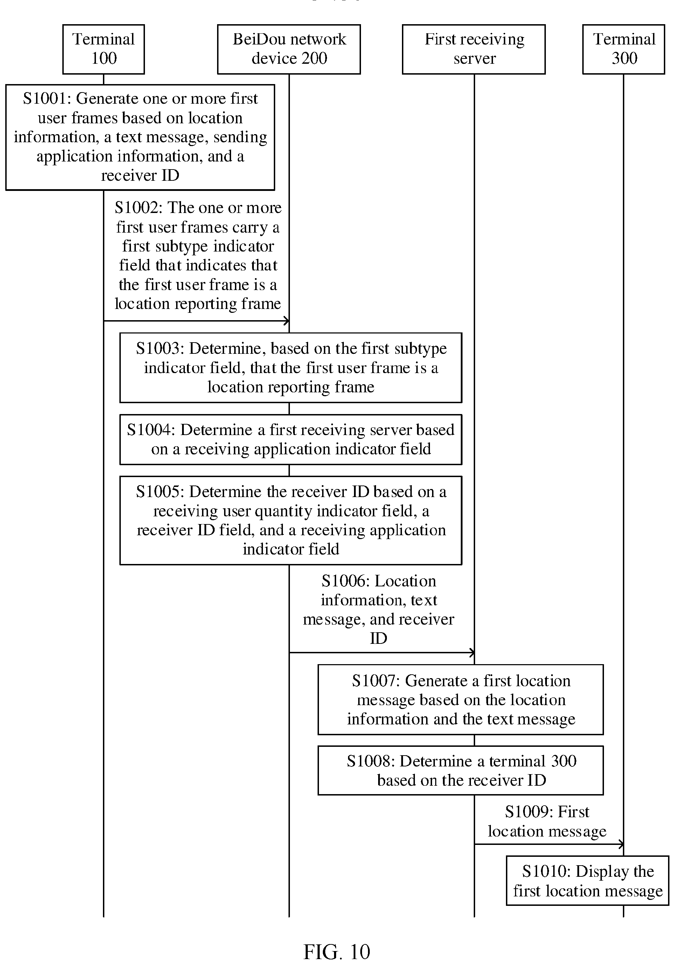

FIG. 10 is a schematic flowchart of another location reporting method in a BeiDou communication system according to an embodiment of this application.

As shown in FIG. 10, the method includes the following steps.

S1001: A terminal 100 generates one or more first user frames based on location information, a text message, sending application information, and a receiver ID.

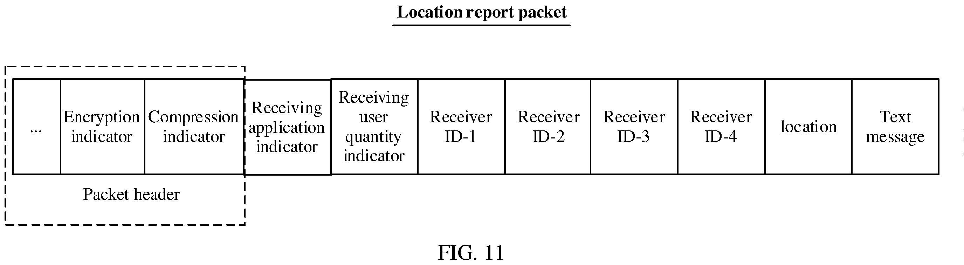

Specifically, the terminal 100 may use the location information, the text message, and the receiver ID as original data, and obtain an application layer packet based on the original data. For detailed descriptions of obtaining, by the terminal 100, the first user frame based on the original data, refer to the embodiment shown in FIG. 2A-1 and FIG. 2A-2. Details are not described herein again. For a frame format of a location reporting frame, refer to the embodiment shown in FIG. 8A. Details are not described herein again. For a structure of user information of a location reporting frame, refer to FIG. 11.

As shown in FIG. 11, user information in one or more location reporting frames may include a location report packet, and the location report packet may include a packet header and original data. The original data may include but is not limited to a receiving application indicator field, a receiving user quantity indicator field, a receiver ID-1 field, a receiver ID-2 field, a receiver ID-3 field, a receiver ID-4 field, a location field, a text message field, and the like.

The receiving application indicator field is determined by information about a sending application (for example, a name or an identity of an application that sends location information), and may indicate an application used for sending. In other words, the receiving application indicator field may indicate the BeiDou network device 200 to send the location information to a first receiving server. The first receiving server is a server of an application used by the terminal 100 to send the location information.

For example, a length of the receiving application indicator field may be two bits, where when a value of the receiving application indicator field is a value A1, the receiving application indicator field may indicate that the application used for sending is a first communication application. When the value of the receiving application indicator field is a value A2, the receiving application indicator field may indicate that the application used for sending is a second communication application, where A1 and A2 are different. For example, A1 may be 00, and A2 may be 01.

In some embodiments, receiver IDs of different applications may have different lengths. For example, a length of a receiver ID field of the first communication application may be 34 bits, and a length of a receiver ID field of the second communication application may be 30 bits. In this way, after determining, based on the receiving application indicator field, the application for sending, the BeiDou network device 200 may determine, based on different applications, a length of a receiver ID field corresponding to an application, and obtain the receiver ID.

For detailed descriptions of the user information in the location reporting frame, refer to the embodiment shown in FIG. 8B. Details are not described herein again.

S1002: The terminal 100 sends the one or more first user frames to the BeiDou network device 200, where the first user frame carries a first subtype indicator field that indicates that the first user frame is a location reporting frame.

S1003: The BeiDou network device 200 determines, based on the first subtype indicator field, that the first user frame is a location reporting frame.

S1004: The BeiDou network device 200 determines a first receiving server based on the receiving application indicator field.

The BeiDou network device 200 may determine, based on the receiving application indicator field in the application layer packet, the first receiving server corresponding to the application that receives the location information.

For example, when determining that the value of the receiving application indicator field is the value A1, the BeiDou network device 200 may determine that the receiving application is the first communication application, and the first receiving server corresponding to the first communication application may be a short message center 25. For another example, when the BeiDou network device 200 determines that the value of the receiving application indicator field is a value A2, it may be determined that the receiving application is the second communication application, and the first receiving server corresponding to the second communication application may be a third-party communication server 60.

S1005: The BeiDou network device 200 determines the receiver ID based on a receiving user quantity indicator field, a receiver ID field, and a receiving application indicator field that are in the location reporting frame.

The BeiDou network device 200 may determine, based on the receiving application indicator field, an application that receives the location information, and obtain a length of a receiver ID field corresponding to the application. The BeiDou network device 200 may determine a quantity of receiver ID fields based on the receiving user quantity indicator field. The BeiDou network device 200 may determine the receiver ID based on a length and a quantity of receiver ID fields.

S1006: The BeiDou network device 200 sends the location information, the text message, and the receiver ID to the first receiving server.

For a description that the BeiDou network device 200 sends the location information, the text message, and the receiver ID to the first receiving server, refer to the description that the BeiDou network device 200 sends the location information, the text message, and the receiver ID to the short message center 25 shown in FIG. 7. Details are not described herein again.

S1007: The first receiving server generates a first location message based on the location information and the text message.

S1008: The first receiving server determines a terminal 300 based on the receiver ID.

S1009: The first receiving server sends the first location message to the terminal 300.

For detailed descriptions of generating, by the first receiving server, the first location message, and sending the first location message to the terminal 300, refer to the foregoing descriptions of generating, by the short message center 25, the first location message, and sending the first location message to the terminal 300 shown in FIG. 7. Details are not described herein again.

S1010: The terminal 300 displays the first location message.

After receiving the first location message, the terminal 300 may display the first location message in different forms (for example, a text form or a map form) in an application corresponding to the first receiving server. Specifically, for detailed descriptions of displaying the first location message by the terminal 300, refer to the embodiment shown in FIG. 7. Details are not described herein again.

In a possible implementation, the terminal 100 may determine the first receiving server by using the receiver ID field. For example, a length of the receiver ID field may be 34 bits. If a length of a receiver ID of the first communication application is 34 bits, a length of a receiver ID of the second communication application is 26 bits. In this case, when the terminal 100 sends the location information to the terminal 300 by using the second communication application, first eight bits of the receiver ID field may be filled with an indicator value (for example, 0). The BeiDou network device 200 may determine the first receiving server based on a bit quantity of an indicator value of a start location in the receiver ID field.

In a possible implementation, the application layer packet generated by the terminal 100 includes a packet type indicator field. The packet type indicator field may indicate a packet type of the application layer packet. The terminal 100 may determine data composition of the original data by using the packet type. For example, the packet type may include but is not limited to a location report packet, a general data packet, and the like, and data composition of application layer packets of different packet types is different.

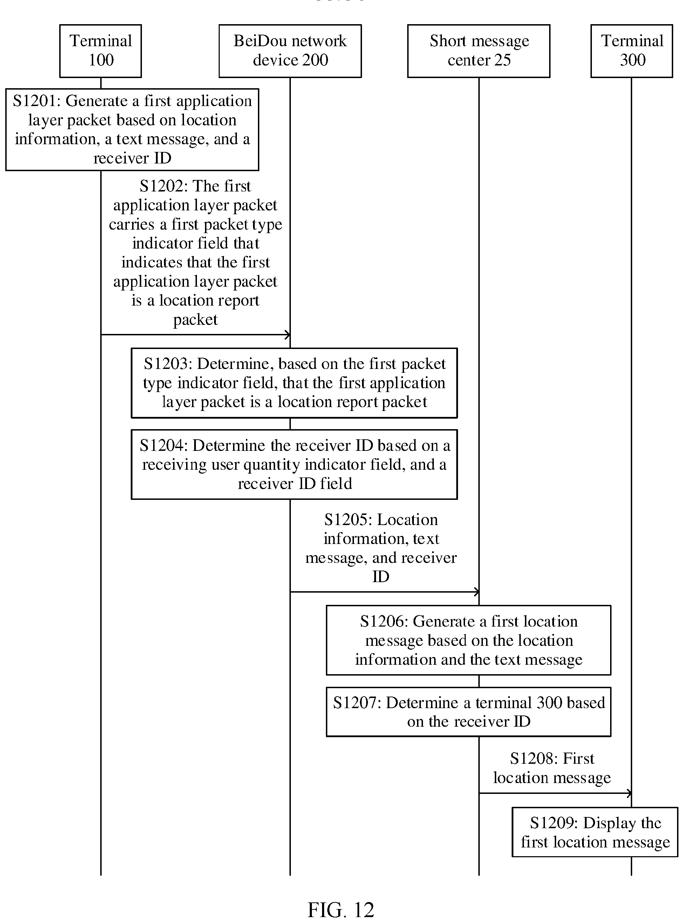

FIG. 12 is a schematic flowchart of yet another location reporting method in a BeiDou communication system according to an embodiment of this application.

As shown in FIG. 12, the method includes the following steps.

S1201: A terminal 100 generates a first application layer packet based on location information, a text message, and a receiver ID.

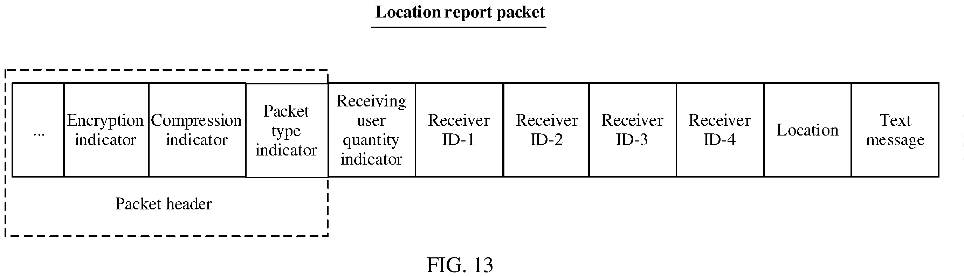

Specifically, the terminal 100 may use the location information, the text message, and the receiver ID as original data, and obtain the first application layer packet based on the original data. The first application layer packet is a location report packet, and a data structure of the first application layer packet is shown in FIG. 13.

As shown in FIG. 13, a location report packet may include a packet header and original data. The packet header may include a packet type indicator field. The packet type indicator field may indicate a packet type of an application layer packet. Original data of application layer packets of different packet types includes different fields. For example, a length of a packet type indicator field may be two bits. When a value of the packet type indicator field is B1, it indicates that the packet type of the application layer packet is a location reporting type. When a value of the packet type indicator field is B2, it indicates that the packet type of the application layer packet is an emergency rescue packet. B1 and B2 are different. It may be understood that an application layer packet whose packet type is a location reporting type may be referred to as a location report packet.

The original data may include but is not limited to a receiving user quantity indicator field, a receiver ID-1 field, a receiver ID-2 field, a receiver ID-3 field, a receiver ID-4 field, a location field, a text message field, and the like. For detailed descriptions of the location report packet, refer to the embodiment shown in FIG. 8B. Details are not described herein again. Herein, the user frame obtained based on the location report packet may be referred to as a location reporting frame.

S1202: The terminal 100 sends the first application layer packet to a BeiDou network device 200, where the first application layer packet carries a first packet type indicator field that indicates that the first application layer packet is a location report packet.

For detailed descriptions of sending, by the terminal 100, the location report packet to the BeiDou network device 200, refer to the embodiment shown in FIG. 2A-1 and FIG. 2A-2. Details are not described herein again.

S1203: The BeiDou network device 200 determines, based on the first packet type indicator field, that the first application layer packet is a location report packet.

S1204: The BeiDou network device 200 determines a receiver ID based on the receiving user quantity indicator field and the receiver ID field that are in the location report packet.

S1205: The BeiDou network device 200 sends the location information, the text message, and the receiver ID to a short message center 25.

The BeiDou network device 200 sends the location information, the text message, and the receiver ID in the location report packet to the short message center 25. For details, refer to the embodiment shown in FIG. 7, and details are not described herein again. It may be understood that, when the location report packet does not include the text message field, the BeiDou network device 200 may send only the location information and the receiver ID to the short message center 25. It may be further understood that, when the location report packet includes a fixed text field, the BeiDou network device 200 may send a specified text message corresponding to the fixed text field or a value of the fixed text field to the short message center 25. It may be further understood that, when the location report packet includes a receiving application indicator field, the BeiDou network device 200 may send the location information and the like to a first receiving server indicated by the receiving application indicator field.

S1206: The short message center 25 generates a first location message based on the location information and the text message.

S1207: The short message center 25 determines a terminal 300 based on the receiver ID.

S1208: The short message center 25 sends the first location message to the terminal 300.

For detailed descriptions of generating, by the short message center 25, the first location message, and sending the first location message to the terminal 300, refer to the embodiment shown in FIG. 7, and details are not described herein again.

S1209: The terminal 300 displays the first location message.

For detailed descriptions of step S1206 to step S1209, refer to the embodiment shown in FIG. 7. Details are not described herein again.

The following describes a terminal 100 provided in embodiments of this application.

The terminal 100 may be a mobile phone, a tablet computer, a desktop computer, a laptop computer, a handheld computer, a notebook computer, an ultra-mobile personal computer (ultra-mobile personal computer, UMPC), a netbook, a cellular phone, or a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

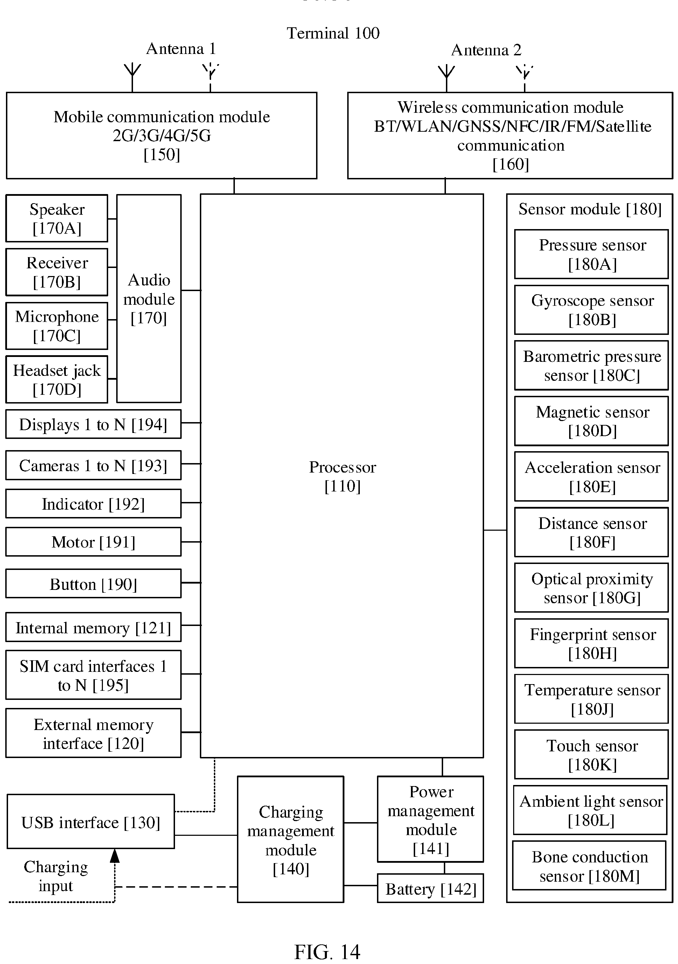

FIG. 14 is a schematic diagram of a hardware structure according to an embodiment of this application.

The following uses the terminal 100 as an example to specifically describe this embodiment. It should be understood that the terminal 100 shown in FIG. 14 is merely an example. The terminal 100 may have more or fewer components than those shown in FIG. 14, or two or more components may be combined, or a different component configuration may be used. The various components shown in FIG. 14 may be implemented in hardware that includes one or more signal processing and/or application-specific integrated circuits, in software, or in a combination of hardware and software.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure illustrated in embodiments of the present invention does not constitute a specific limitation on the terminal 100. In some other embodiments of this application, the terminal 100 may include more or fewer components than those shown in the figure, or may have some components combined or split, or may have a different arrangement of the components. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store an instruction or data that has been used or cyclically used by the processor 110. If the processor 110 needs to use the instructions or the data again, the processor may directly invoke the instructions or the data from the memory. This avoids repeated access, shortens a waiting time of the processor 110, and therefore improves system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface to implement a shooting function of the terminal 100. The processor 110 communicates with the display 194 through the DSI interface to implement a display function of the terminal 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect a charger to charge the terminal 100, and may also be used to transfer data between the terminal 100 and a peripheral device, or may be configured to connect to a headset for playing audio through the headset. The interface may be further configured to connect to another electronic device such as an AR device.

It can be understood that the interface connection relationship between the modules illustrated in embodiments of the present invention is merely a schematic illustration, and does not constitute a limitation on the structure of the terminal 100. In some other embodiments of this application, the terminal 100 may alternatively use an interface connection manner different from that in the foregoing embodiment, or a combination of multiple interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments in which wireless charging is performed, the charging management module 140 may receive a wireless charging input through a wireless charging coil of the terminal 100. The charging management module 140 can supply power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal 100 may be implemented through the antenna 1, the antenna 2, the mobile communication module 150, the wireless communication module 160, a modem processor, a baseband processor, and the like.

The antenna 1 and the antenna 2 are configured to transmit and receive electromagnetic wave signals. Each antenna in the terminal 100 may be configured to cover one or more communication frequency bands. Different antennas may be further reused, to improve antenna utilization. For example, the antenna 1 may be multiplexed as a diversity antenna of a wireless local area network. In some other embodiments, an antenna may be used in combination with a tuning switch.

The mobile communication module 150 may provide a wireless communication solution including 2G/3G/4G/5G applied to the terminal 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in the same component as the mobile communication module 150 or another function module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), a satellite communication module, frequency modulation (frequency modulation, FM), near field communication (near field communication, NFC), an infrared (infrared, IR) technology, or the like and that is applied to the terminal 100. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

The satellite communication module may be configured to communicate with a satellite network device. For example, in a BeiDou communication system, a satellite communication module may communicate with a BeiDou network device 200, and the satellite communication module may support short message transmission between the satellite communication module and the BeiDou network device 200.

In some embodiments, the antenna 1 of the terminal 100 is coupled to the mobile communication module 150, and the antenna 2 is coupled to the wireless communication module 160, so that the terminal 100 can communicate with the network and other devices through a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal 100 may include one or N displays 194, where N is a positive integer greater than 1.

The terminal 100 may implement a shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further optimize the image noise and luminance. The ISP may further optimize parameters such as exposure and a color temperature of a photographing scenario. In some embodiments, the ISP may be disposed in the camera 193.

The camera 193 is configured to capture a static image or a video. An optical image of an object is generated through a lens, and is projected to a photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to: compress or decompress a digital video. The terminal 100 may support one or more video codecs. In this way, the terminal 100 can play or record videos in various encoding formats, for example, moving picture experts group (moving picture experts group, MPEG) 1, MPEG2, MPEG3, and MPEG4.

The NPU is a neural-network (neural-network, NN) computing processor, quickly processes input information with reference to a structure of a biological neural network, for example, with reference to a transfer mode between human brain neurons, and may further continuously perform self-learning. Applications such as intelligent cognition of the terminal 100 may be implemented through the NPU, for example, image recognition, facial recognition, speech recognition, and text understanding

The external memory interface 120 may be configured to connect an external memory card, such as a Micro SD card, to expand a storage capability of the terminal 100. An external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to implement various function applications and data processing of the terminal 100. The internal memory 121 may include a program storage area and a data storage area. The program storage area may store an operating system, an application required by at least one function (for example, a voice playing function or an image playing function), and the like. The data storage area may store data (for example, audio data or a phone book) created with the use of the terminal 100. In addition, the internal memory 121 may include a high speed random access memory, or may include a nonvolatile memory, for example, at least one magnetic disk storage device, a flash storage device, or a universal flash storage (universal flash storage, UFS).

The terminal 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "horn", is configured to convert an audio electrical signal into a sound signal. The terminal 100 may allow for listening to music or answering hands-free calls with the speaker 170A.

The receiver 170B, also referred to as an "earpiece", is configured to convert an audio electrical signal into a sound signal. When a call is answered or speech information is received through the terminal 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunication industry association of the USA (cellular telecommunication industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure intensity based on a change in the capacitance. When a touch operation is performed on the display 194, the terminal 100 detects intensity of the touch operation by using the pressure sensor 180A. The terminal 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a short message application icon, an instruction for viewing a short message is executed. When a touch operation whose touch operation intensity is greater than or equal to the first pressure threshold is performed on the short message application icon, an instruction for creating a new short message is performed.

The gyroscope sensor 180B may be configured to determine a motion posture of the terminal 100. In some embodiments, an angular velocity of the terminal 100 around three axes (namely, axes x, y, and z) may be determined by using the gyroscope sensor 180B. The gyroscope sensor 180B may be configured to implement image stabilization during photographing. For example, when a shutter is pressed, the gyroscope sensor 180B detects an angle at which the terminal 100 jitters, calculates, based on the angle, a distance for which a lens module needs to compensate, and allows a lens to cancel the jitter of the terminal 100 through reverse motion, to implement the image stabilization. The gyroscope sensor 180B may also be used in a navigation scenario and a motion-sensing game scenario.

The barometric pressure sensor 180C is configured to measure barometric pressure. In some embodiments, the terminal 100 calculates an altitude based on a barometric pressure value measured by the barometric pressure sensor 180C, to assist in positioning and navigation.

The magnetic sensor 180D includes a Hall sensor. The terminal 100 may detect opening and closing of a flip cover by using the magnetic sensor 180D. In some embodiments, when the terminal 100 is a clamshell phone, the terminal 100 may detect opening and closing of a flip cover by using the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the terminal 100. A magnitude and a direction of gravity may be detected when the terminal 100 is stationary. The acceleration sensor 180E may be further configured to identify a posture of the electronic device, and is applied to switching between a landscape mode and a portrait mode, a pedometer, or the like.

The distance sensor 180F is configured to measure a distance. The terminal 100 may measure a distance in an infrared manner or a laser manner. In some embodiments, in a photographing scenario, the terminal 100 may measure a distance by using the distance sensor 180F to implement quick focusing.

The optical proximity sensor 180G may include, for example, a light-emitting diode (LED) and an optical detector such as a photodiode. The light-emitting diode may be an infrared light-emitting diode. The terminal 100 transmits infrared light by using the light-emitting diode. The terminal 100 detects infrared reflected light from a nearby object by using the photodiode. When sufficient reflected light is detected, it may be determined that there is an object near the terminal 100. When insufficient reflected light is detected, the terminal 100 may determine that there is no object near the terminal 100. The terminal 100 may detect, by using the optical proximity sensor 180G, that the terminal 100 held by the user is close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The terminal 100 may adaptively adjust brightness of the display 194 based on the sensed ambient light brightness. The ambient light sensor 180L may also be configured to automatically adjust a white balance during photographing. The ambient light sensor 180L may further cooperate with the optical proximity sensor 180G to detect whether the terminal 100 is in a pocket, to avoid an accidental touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing policy by using the temperature detected by the temperature sensor 180J. For example, when the temperature reported by the temperature sensor 180J exceeds a threshold, the terminal 100 lowers performance of a processor located near the temperature sensor 180J, to reduce power consumption for thermal protection. In some other embodiments, when the temperature is lower than another threshold, the terminal 100 heats the battery 142 to avoid abnormal shutdown of the terminal 100 due to a low temperature. In some other embodiments, when the temperature is lower than still another threshold, the terminal 100 boosts an output voltage of the battery 142 to avoid abnormal shutdown caused by a low temperature.

The touch sensor 180K is also referred to as a "touch panel". The touch sensor 180K may be disposed on the display 194, and a touchscreen, also referred to as a "touchscreen", is formed by the touch sensor 180K and the display 194. The touch sensor 180K is configured to detect a touch operation performed on or near the touch sensor 180K. The touch sensor may transfer the detected touch operation to the application processor to determine a type of the touch event. A visual output related to the touch operation may be provided on the display 194. In some other embodiments, the touch sensor 180K may alternatively be disposed on a surface of the terminal 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive a button input, and generate a button signal input related to user setting and function control of the terminal 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, or the like.

The SIM card interface 195 is configured to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 can support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external memory card. The terminal 100 interacts with a network through the SIM card, to implement functions such as calling and data communication. In some embodiments, the terminal 100 uses an eSIM, namely, an embedded SIM card. The eSIM card may be embedded in the terminal 100, and cannot be separated from the terminal 100.

The following describes a location reporting method in a BeiDou communication system provided in an embodiment of this application.

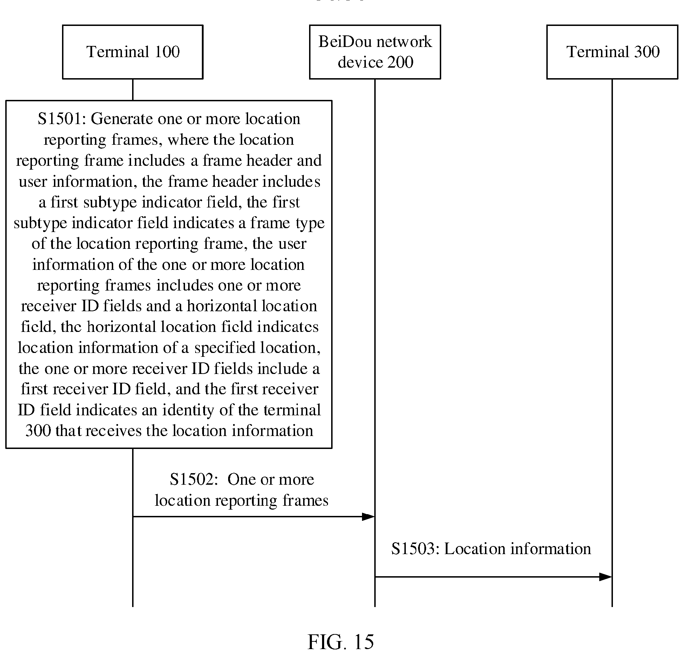

FIG. 15 is a schematic flowchart of a location reporting method in a BeiDou communication system according to an embodiment of this application.

As shown in FIG. 15, the location reporting method in a BeiDou communication system includes the following steps.

S1501: A terminal 100 generates one or more location reporting frames. The location reporting frame includes a frame header and user information, the frame header includes a first subtype indicator field, and the first subtype indicator field indicates a frame type of the location reporting frame. The user information of the one or more location reporting frames includes one or more receiver ID fields and a location field, the location field indicates location information of a specified location, the one or more receiver ID fields include a first receiver ID field, and the first receiver ID field indicates an identity of a terminal 300 that receives the location information.

S1502: The terminal 100 sends the one or more location reporting frames to a BeiDou network device 200.

S1503: The BeiDou network device 200 sends the location information to a terminal 300.

For detailed descriptions of generating the one or more location reporting frames by the terminal 100, refer to the embodiment shown in FIG. 7. Details are not described herein again.

Specifically, for detailed descriptions of receiving, by the BeiDou network device 200, the one or more location reporting frames and sending the location information of the specified location in the one or more location reporting frames to the terminal 300, refer to the embodiment shown in FIG. 7. Details are not described herein again.

The following describes some possible implementations performed by the terminal 100.

In a possible implementation, the location information includes longitude information and latitude information of the specified location.

Specifically, refer to the embodiment in FIG. 8B.

In a possible implementation, the location information further includes height information of the specified location.

Specifically, refer to the embodiment in FIG. 8B.

In a possible implementation, the specified location is a location at which the terminal 100 is currently located or a location entered by a user.

Specifically, refer to the embodiment in FIG. 8B.

In a possible implementation, that a terminal 100 generates one or more location reporting frames specifically includes: The terminal 100 generates a location report packet at an application App layer based on the location information and an identity of a terminal that receives the location information; and the terminal 100 splits the location report packet into one or more location reporting frames at a message data convergence MDCP layer and a satellite link control SLC layer.

Specifically, refer to the embodiment in FIG. 7.

In a possible implementation, the one or more location reporting frames further include a receiving user quantity indicator field, and the receiving user quantity indicator field indicates a quantity of receiver ID fields.

Specifically, refer to the embodiment in FIG. 8B.

In a possible implementation, the one or more location reporting frames further include a fixed text field, and the fixed text field indicates an identity of a specified text message.

Specifically, refer to the embodiment in FIG. 8B.

In a possible implementation, the one or more location reporting frames further include a text message field, and the text message field includes message data entered by the user.

Specifically, refer to the embodiment in FIG. 8B.

In a possible implementation, the one or more location reporting frames further include a receiving application indicator field, and the receiving application indicator field indicates the BeiDou network device 200 to send the location information of the specified location to the terminal 300 by using a first receiving server.

Specifically, refer to the embodiment in FIG. 11.

The following describes some possible implementations performed by the BeiDou network device 200.

In a possible implementation, the location information includes longitude information and latitude information of the specified location.

In a possible implementation, the location information further includes height information of the specified location.

Specifically, refer to the embodiment in FIG. 8B.

In a possible implementation, that the BeiDou network device sends the location information in the one or more location reporting frames to a second terminal specifically includes: The BeiDou network device determines a frame type of the one or more location reporting frames at a satellite link control SLC layer based on a first subtype indicator field, and uploads the frame type to an application App layer. The BeiDou network device performs processing at the SLC layer and a message data convergence MDCP layer based on the one or more location reporting frames to obtain a location report packet.

The BeiDou network device sends location information in the location report packet to the second terminal at the App layer based on the frame type.

Specifically, refer to the embodiment in FIG. 7.

In a possible implementation, the one or more location reporting frames include a receiving user quantity indicator field, and the receiving user quantity indicator field indicates the BeiDou network device to obtain a receiver ID field in the one or more location reporting frames.

Specifically, refer to the embodiment in FIG. 8B.

In a possible implementation, the one or more location reporting frames further include a fixed text field, and the fixed text field indicates the BeiDou network device to send the specified text message to the second terminal.

Specifically, refer to the embodiment in FIG. 8B.

In a possible implementation, the one or more location reporting frames further include a text message field, and the text message field indicates the BeiDou network device to send, to the second terminal, message data entered by the user.

Specifically, refer to the embodiment in FIG. 8B.

In a possible implementation, the one or more location reporting frames include a receiving application indicator field, and the receiving application indicator field indicates the BeiDou network device to send the location information to the second terminal by using a first receiving server. That the BeiDou network device sends the location information in the one or more location reporting frames to the second terminal specifically includes: The BeiDou network device sends the location information in the one or more location reporting frames to the second terminal by using the first receiving server.

Specifically, refer to the embodiment in FIG. 10.

The foregoing content describes in detail the methods provided in this application. To better implement the foregoing solutions in embodiments of this application, embodiments of this application further provide corresponding apparatuses or devices.

In embodiments of this application, the terminal 100 may be divided into function modules based on the method examples. For example, each function module may be obtained through division based on each corresponding function, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

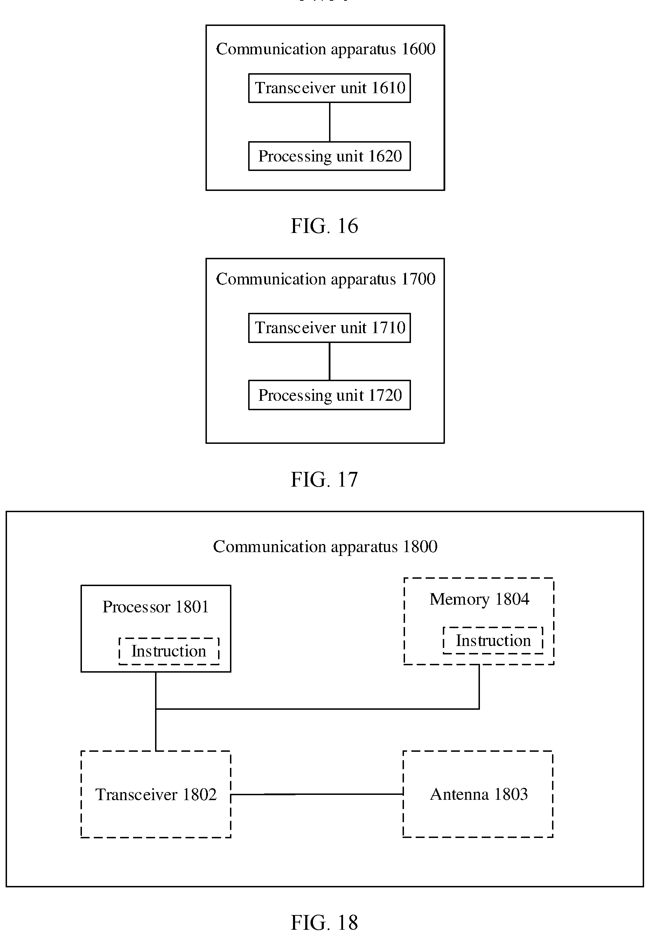

The following describes in detail communication apparatuses in embodiments of this application with reference to FIG. 16 to FIG. 19.

When an integrated unit is used, refer to FIG. 16. FIG. 16 is a schematic diagram of a structure of a communication apparatus 1600 according to an embodiment of this application. The communication apparatus 1600 may be the terminal 100 in the foregoing embodiments. Optionally, the communication apparatus 1600 may be a chip/chip system, for example, a BeiDou communication chip. As shown in FIG. 16, the communication apparatus 1600 may include a transceiver unit 1610 and a processing unit 1620.

In a design, the processing unit 1620 may be configured to generate one or more location reporting frames.

The transceiver unit 1610 may be configured to send the one or more location reporting frames to a BeiDou network device 200.

Optionally, the transceiver unit 1610 may be further configured to perform functional steps related to sending and receiving that are performed by the terminal 100 in the method embodiment shown in FIG. 15.

Optionally, the processing unit 1620 may be further configured to perform functional steps related to protocol parsing, encapsulation, and operation determining that are performed by the terminal 100 in the method embodiment shown in FIG. 15.

It should be understood that the communication apparatus 1600 in this design may correspondingly perform method steps performed by the terminal 100 in the foregoing embodiments. For brevity, details are not described herein again.

When an integrated unit is used, refer to FIG. 17. FIG. 17 is a schematic diagram of a structure of a communication apparatus 1700 according to an embodiment of this application. The communication apparatus 1700 may be the BeiDou network device 200 in the foregoing embodiments. Optionally, the communication apparatus 1700 may be a specific network element in the BeiDou network device 200, for example, one network element or a combination of a plurality of network elements in a BeiDou ground transceiver station 22, a BeiDou central station 23, and a BeiDou short message converged communication platform 24. As shown in FIG. 17, the communication apparatus 1700 may include a transceiver unit 1710 and a processing unit 1720.

In a design, the transceiver unit 1710 may be configured to receive one or more location reporting frames sent by the terminal 100.

The processing unit 1720 may be configured to obtain the location information from the one or more location reporting frames.

The transceiver unit 1710 is further configured to send the location information to the terminal 300.

Optionally, the transceiver unit 1710 may be further configured to perform functional steps related to sending and receiving that are performed by the BeiDou network device 200 in the method embodiment shown in FIG. 15.

Optionally, the processing unit 1720 may be further configured to perform functional steps related to protocol parsing, encapsulation, and operation determining that are performed by the BeiDou network device 200 in the method embodiment shown in FIG. 15.

It should be understood that the communication apparatus 1700 in this design may correspondingly perform method steps performed by the BeiDou network device 200 in the foregoing embodiments. For brevity, details are not described herein again.

The foregoing describes the terminal 100 and the BeiDou network device 200 in embodiments of this application. It should be understood that any product having a function of the terminal 100 in FIG. 16 and any product having a function of the BeiDou network device 200 in FIG. 17 fall within the protection scope of embodiments of this application.

In a possible product form, the terminal 100 in embodiments of this application may be implemented by using general bus architectures.

Refer to FIG. 18. FIG. 18 is a schematic diagram of a structure of a communication apparatus 1800 according to an embodiment of this application. The communication apparatus 1800 may be a terminal 100 or an apparatus in the terminal 100. As shown in FIG. 18, the communication apparatus 1800 includes a processor 1801 and a transceiver 1802 that is internally connected to and communicates with the processor. The processor 1801 is a general-purpose processor, a dedicated processor, or the like, and for example, may be a baseband processor or a central processing unit of satellite communication. The baseband processor in satellite communication may be configured to process a satellite communication protocol and satellite communication data. The central processing unit may be configured to: control a communication apparatus (for example, a baseband chip, a terminal, or a terminal chip), execute a computer program, and process data of the computer program. The transceiver 1802 may be referred to as a transceiver unit, a transceiver machine, a transceiver circuit, or the like, and is configured to implement a transceiver function. The transceiver 1802 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function. Optionally, the communication apparatus 1800 may further include an antenna 1803 and/or a radio frequency unit (not shown in the figure). The antenna 1803 and/or the radio frequency unit may be located inside the communication apparatus 1800, or may be separated from the communication apparatus 1800, that is, the antenna 1803 and/or the radio frequency unit may be deployed remotely or in a distributed manner.

Optionally, the communication apparatus 1800 may include one or more memories 1804, and the one or more memories 1804 may store instructions. The instructions may be a computer program. The computer program may be run on the communication apparatus 1800, so that the communication apparatus 1800 performs methods described in the foregoing method embodiments. Optionally, the memory 1804 may further store data. The communication apparatus 1800 and the memory 1804 may be separately disposed, or may be integrated together.

The processor 1801, the transceiver 1802, and the memory 1804 may be connected by using a communication bus.

In a design, the communication apparatus 1800 may be configured to perform a function of the terminal 100 in the foregoing embodiments. The processor 1801 may be configured to perform protocol parsing, encapsulation, and operation determining related functional steps performed by the terminal 100 in the embodiment shown in FIG. 16, and/or another process of the technology described in this specification. The transceiver 1802 may be configured to perform sending and receiving related functional steps performed by the terminal 100 in the embodiment shown in FIG. 16, and/or another process of the technology described in this specification.

In any one of the foregoing designs, the processor 1801 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1801 may store instructions, and the instructions may be a computer program. The computer program is run on the processor 1801, so that the communication apparatus 1800 can perform the method steps performed by the terminal 100 in the foregoing method embodiments. The computer program may be fixed in the processor 1801. In this case, the processor 1801 may be implemented by hardware.

In an implementation, the communication apparatus 1800 may include a circuit, and the circuit may implement the sending, receiving, or communication function in the foregoing method embodiments. The processor and the transceiver that are described in this application may be implemented on an integrated circuit (integrated circuit, IC), an analog IC, a radio frequency integrated circuit RFIC, a mixed-signal IC, an application specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 18. The communication apparatus 1800 may be an independent device or may be a part of a large device. For example, the communication apparatus 1800 may be:
(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver machine, a terminal, an intelligent terminal, a cellular phone, a wireless device, a handheld device, a mobile unit, a vehicle-mounted device, a network device, a cloud device, or an artificial intelligence device; or
(6) others.

In a possible product form, any network element (for example, a BeiDou ground transceiver station 22, a BeiDou central station 23, or a BeiDou short message converged communication platform 24) in the BeiDou network device 200 in embodiments of this application may be implemented by using a general bus architecture.

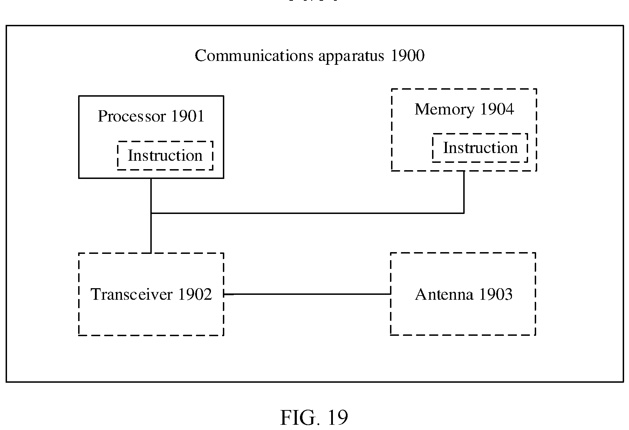

Refer to FIG. 19. FIG. 19 is a schematic diagram of a structure of a communication apparatus 1900 according to an embodiment of this application. The communication apparatus 1900 may be a BeiDou network device 200 or an apparatus in the BeiDou network device 200. As shown in FIG. 19, the communication apparatus 1900 includes a processor 1901 and a transceiver 1902 that is internally connected to and communicates with the processor. The processor 1901 is a general-purpose processor, a dedicated processor, or the like, and for example, may be a baseband processor or a central processing unit of satellite communication. The baseband processor in satellite communication may be configured to process a satellite communication protocol and satellite communication data. The central processing unit may be configured to: control a communication apparatus (for example, a baseband chip), execute a computer program, and process data of the computer program. The transceiver 1902 may be referred to as a transceiver unit, a transceiver machine, a transceiver circuit, or the like, and is configured to implement a transceiver function. The transceiver 1902 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function. Optionally, the communication apparatus 1900 may further include an antenna 1903 and/or a radio frequency unit (not shown in the figure). The antenna 1903 and/or the radio frequency unit may be located inside the communication apparatus 1900, or may be separated from the communication apparatus 1900, that is, the antenna 1903 and/or the radio frequency unit may be deployed remotely or in a distributed manner.

Optionally, the communication apparatus 1900 may include one or more memories 1904, and the one or more memories 1904 may store instructions. The instructions may be a computer program. The computer program may be run on the communication apparatus 1900, so that the communication apparatus 1900 performs methods described in the foregoing method embodiments. Optionally, the memory 1904 may further store data. The communication apparatus 1900 and the memory 1904 may be separately disposed, or may be integrated together.

The processor 1901, the transceiver 1902, and the memory 1904 may be connected by using a communication bus.

In a design, the communication apparatus 1900 may be configured to perform a function of the BeiDou network device 200 in the foregoing embodiments. The processor 1901 may be configured to perform protocol parsing, encapsulation, and operation determining related functional steps performed by the BeiDou network device 200 in the embodiment shown in FIG. 17, and/or another process of the technology described in this specification. The transceiver 1902 may be configured to perform sending and receiving related functional steps performed by the BeiDou network device 200 in the embodiment shown in FIG. 17, and/or another process of the technology described in this specification.

In any one of the foregoing designs, the processor 1901 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1901 may store instructions, and the instructions may be a computer program. The computer program is run on the processor 1901, so that the communication apparatus 1900 can perform the method steps performed by the BeiDou network device 200 in the foregoing method embodiments. The computer program may be fixed in the processor 1901. In this case, the processor 1901 may be implemented by hardware.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a BeiDou communication system, including a terminal 100 and a BeiDou network device 200. The terminal 100 and the BeiDou network device 200 may perform the method in any one of the foregoing embodiments.

A short message communication function in a BeiDou communication system is described in this application. It may be understood that another satellite system may also have a short message communication function. Therefore, in the BeiDou communication system, if another satellite system also supports a short message communication function, the method described in this application is also applicable to communication of the another satellite system.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

Persons skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a dedicated computer.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A location reporting method in a BeiDou communication system, comprising:
generating, by a first terminal, one or more location reporting frames; and
sending, by the first terminal, the one or more location reporting frames to a BeiDou network device, wherein the location reporting frame comprises a frame header and user information, the frame header comprises a first subtype indicator field, and the first subtype indicator field indicates a frame type of the location reporting frame; and the user information of the one or more location reporting frames comprises one or more receiver ID fields and a location field, the location field indicates location information of a specified location, the one or more receiver ID fields comprise a first receiver ID field, and the first receiver ID field indicates an identity of a second terminal that receives the location information.

2. The method according to claim 1, wherein the location information comprises longitude information and latitude information of the specified location.

3. The method according to claim 2, wherein the location information further comprises height information of the specified location.

4. The method according to any one of claims 1 to 3, wherein the specified location is a location at which the first terminal is currently located or a location entered by a user.

5. The method according to any one of claims 1 to 4, wherein the generating, by a first terminal, one or more location reporting frames specifically comprises:
generating, by the first terminal, a location report packet at an application App layer based on the location information and an identity of a terminal that receives the location information; and
splitting, by the first terminal, the location report packet into the one or more location reporting frames at a message data convergence MDCP layer and a satellite link control SLC layer.

6. The method according to any one of claims 1 to 5, wherein the one or more location reporting frames further comprise a receiving user quantity indicator field, and the receiving user quantity indicator field indicates a quantity of receiver ID fields.

7. The method according to any one of claims 1 to 6, wherein the one or more location reporting frames further comprise a fixed text field, and the fixed text field indicates an identity of a specified text message.

8. The method according to any one of claims 1 to 7, wherein the one or more location reporting frames further comprise a text message field, and the text message field comprises message data entered by the user.

9. The method according to any one of claims 1 to 8, wherein the one or more location reporting frames further comprise a receiving application indicator field, and the receiving application indicator field indicates the BeiDou network device to send the location information of the specified location to the second terminal by using a first receiving server.

10. A location reporting method in a BeiDou communication system, comprising:
receiving, by a BeiDou network device, one or more location reporting frames sent by a first terminal, wherein the location reporting frame comprises a frame header and user information, the frame header comprises a first subtype indicator field, and the first subtype indicator field indicates a frame type of the location reporting frame; and the user information of the one or more location reporting frames comprises one or more receiver ID fields and a location field, the location field indicates location information of a specified location, the one or more receiver ID fields comprise a first receiver ID field, and the first receiver ID field indicates an identity of a second terminal that receives the location information; and
sending, by the BeiDou network device, the location information in the one or more location reporting frames to the second terminal.

11. The method according to claim 10, wherein the location information comprises longitude information and latitude information of the specified location.

12. The method according to claim 11, wherein the location information further comprises height information of the specified location.

13. The method according to any one of claims 10 to 12, wherein the sending, by the BeiDou network device, the location information in the one or more location reporting frames to the second terminal specifically comprises:
determining, by the BeiDou network device at a satellite link control SLC layer, a frame type of the one or more location reporting frames based on the first subtype indicator field, and uploading the frame type to an application App layer;
performing, by the BeiDou network device, processing at the SLC layer and a message data convergence MDCP layer based on the one or more location reporting frames to obtain a location report packet; and
sending, by the BeiDou network device, the location information in the location report packet to the second terminal at the App layer based on the frame type.

14. The method according to any one of claims 10 to 13, wherein the one or more location reporting frames comprise a receiving user quantity indicator field, and the receiving user quantity indicator field indicates the BeiDou network device to obtain the receiver ID field in the one or more location reporting frames.

15. The method according to any one of claims 10 to 14, wherein the one or more location reporting frames further comprise a fixed text field, and the fixed text field indicates the BeiDou network device to send a specified text message to the second terminal.

16. The method according to any one of claims 10 to 15, wherein the one or more location reporting frames further comprise a text message field, and the text message field indicates the BeiDou network device to send, to the second terminal, message data entered by the user.

17. The method according to any one of claims 10 to 16, wherein the one or more location reporting frames comprise a receiving application indicator field, the receiving application indicator field indicates the BeiDou network device to send the location information to the second terminal by using a first receiving server; and the sending, by the BeiDou network device, the location information in the one or more location reporting frames to the second terminal specifically comprises:
sending, by the BeiDou network device, the location information in the one or more location reporting frames to the second terminal by using the first receiving server.

18. A BeiDou communication system, comprising a first terminal and a BeiDou network device, wherein
the first terminal is configured to generate one or more location reporting frames, wherein the location reporting frame comprises a frame header and user information, the frame header comprises a first subtype indicator field, and the first subtype indicator field indicates a frame type of the location reporting frame; the user information of the one or more location reporting frames comprises one or more receiver ID fields and a location field, the location field indicates location information of a specified location, the one or more receiver ID fields comprise a first receiver ID field, and the first receiver ID field indicates an identity of a second terminal that receives the location information;
the first terminal is further configured to send the one or more location reporting frames to the BeiDou network device;
the BeiDou network device is configured to receive the one or more location reporting frames sent by the first terminal; and
the BeiDou network device is further configured to send the location information in the one or more location reporting frames to the second terminal.

19. A communication apparatus, comprising one or more processors, one or more memories, and a transceiver, wherein the transceiver and the one or more memories are coupled to the one or more processors, the one or more memories are configured to store computer program code, the computer program code comprises computer instructions, and when the one or more processors execute the computer instructions, the communication apparatus is enabled to perform the method according to any one of claims 1 to 9.

20. The communication apparatus according to claim 19, wherein the communication apparatus is a terminal.

21. A communication apparatus, comprising one or more processors, one or more memories, and a transceiver, wherein the transceiver and the one or more memories are coupled to the one or more processors, the one or more memories are configured to store computer program code, the computer program code comprises computer instructions, and when the one or more processors execute the computer instructions, the communication apparatus is enabled to perform the method according to any one of claims 10 to 17.

22. The communication apparatus according to claim 21, wherein the communication apparatus is a BeiDou network device.

23. A computer-readable storage medium, wherein the computer-readable storage medium stores instructions, and when the instructions are run on a computer, the computer is enabled to perform the method according to any one of claims 1 to 9.

24. A computer-readable storage medium, wherein the computer-readable storage medium stores instructions, and when the instructions are run on a computer, the computer is enabled to perform the method according to any one of claims 10 to 17.

25. A chip or a chip system, applied to a terminal, comprising a processing circuit and an interface circuit, wherein the interface circuit is configured to receive code instructions and transmit the code instructions to the processing circuit, and the processing circuit is configured to run the code instructions to perform the method according to any one of claims 1 to 9.
